# FASCICULE DE BREVET EUROPEEN

(11) **EP 3 045 920 B1**
(45) Date de publication et mention de la délivrance du brevet: **05.04.2017**
(21) Numéro de dépôt: 15201876.8
(22) Date de dépôt: 22.12.2015
(51) Int. Cl.: G01P 21/02, G01P 5/26, B64C 27/04, B64D 43/02, G08G 5/00

(54) **PROCEDE ET DISPOSITIF DE DETERMINATION DE LA VITESSE DU VENT A PRENDRE EN COMPTE AFIN D'OPTIMISER LA MASSE AU DECOLLAGE D'UN AERONEF**
VERFAHREN UND VORRICHTUNG ZUR BESTIMMUNG DER WINDGESCHWINDIGKEIT, DIE ZUR OPTIMIERUNG DER MASSE BEIM ABHEBEN EINES FLUGZEUGS BERÜCKSICHTIGT WERDEN MUSS
A METHOD AND A DEVICE FOR DETERMINING THE WIND SPEED TO BE TAKEN INTO ACCOUNT IN ORDER TO OPTIMIZE THE TAKEOFF WEIGHT OF AN AIRCRAFT

(30) Priorité: 15.01.2015 FR 1500077
(43) Date de publication de la demande: 20.07.2016
(73) Titulaire: Airbus Helicopters, 13725 Marignane Cedex (FR)
(72) Inventeur: POUDRAI, Etienne, 13004 MARSEILLE (FR); CERTAIN, Nicolas, 13090 AIX EN PROVENCE (FR); SPINOSI, Bernard, 13004 MARSEILLE (FR)
(74) Mandataire: GPI & Associés

(56) Documents cités:
- EP-A1- 2 799 890
- WO-A1-2014/102175
- FR-A1- 2 988 851
- US-A1- 2010 128 252

## Description

La présente invention se situe dans le domaine de l'optimisation des performances d'un aéronef, et plus particulièrement d'un aéronef à voilure tournante lors de son décollage.

La présente invention concerne un procédé de détermination de la vitesse du vent à prendre en compte afin d'optimiser la masse au décollage d'un aéronef ainsi qu'un dispositif pour mettre en oeuvre ce procédé.

La capacité d'optimiser les performances des aéronefs est un élément crucial pour les opérateurs de tout aéronef. Les performances d'un aéronef sont par ailleurs fortement influencées par la vitesse de l'aéronef par rapport à l'air environnant. Par commodité, l'expression « vitesse air » est utilisée dans la suite du texte pour désigner la vitesse d'un aéronef par rapport à l'air. Cette vitesse air est souvent désignée par l'acronyme « TAS » correspondant à l'expression en langue anglaise « True Air Speed ».

En effet, la puissance consommée par un aéronef, et notamment un aéronef à voilure tournante dépend de sa vitesse air, quelle que soit la phase de vol réalisée par l'aéronef. On connaît par exemple le document EP1078308 qui décrit que l'enveloppe limite des vitesses air admissible d'un aéronef est convertie en enveloppe limite de vitesse par rapport au sol en prenant en compte la vitesse et la direction du vent.

De fait, la masse maximale d'un aéronef, et en particulier sa masse au décollage, est également fonction de la vitesse air de cet aéronef. En outre, dans le cas particulier d'un aéronef décollant avec une vitesse nulle par rapport au sol, tel un aéronef à voilure tournante, cette vitesse air de l'aéronef correspond à la vitesse du vent au niveau de l'aéronef.

Ainsi, la masse maximale au décollage d'un aéronef à voilure tournante est définie d'une part par les caractéristiques techniques de l'aéronef et d'autre part par la vitesse du vent, et plus particulièrement du vent longitudinal, subi par cet aéronef. On entend par « vent longitudinal » la projection du vent selon la direction longitudinale de l'aéronef. Un aéronef comporte en effet trois directions privilégiées, une direction longitudinale, une direction transversale et une direction verticale définissant ainsi un repère local orthonormé lié à l'aéronef.

Par exemple, pour un aéronef à voilure tournante évoluant à des vitesses air élevées, typiquement supérieures à la vitesse optimale de montée V_{OM} de l'aéronef, lorsque la vitesse du vent de face subi par l'aéronef augmente, la puissance nécessaire à l'aéronef pour réaliser un vol en palier augmente également. En effet, cette augmentation de la vitesse air génère notamment une augmentation des trainées aérodynamiques subies par l'aéronef nécessitant une augmentation de la puissance que doit fournir l'aéronef.

A contrario, pour de faibles vitesses air, typiquement inférieures ou égales à la vitesse optimale de montée V_{OM} de l'aéronef, lorsque la vitesse du vent de face subi par l'aéronef augmente, la puissance nécessaire à l'aéronef pour réaliser un vol en palier diminue. Pour cette plage de vitesses air, l'augmentation de la vitesse air génère en effet une augmentation de la portance du rotor principal qui est supérieure à l'augmentation des trainées aérodynamiques subies par l'aéronef et favorable au vol de l'aéronef.

De fait, un aéronef étant équipé d'une installation motrice délivrant une puissance donnée, la masse maximale au décollage de l'aéronef peut varier selon la vitesse du vent de face subi par cet aéronef lors de son décollage.

Les aéronefs sont classiquement équipés d'une installation anémo-barométrique conventionnelle fournissant au pilote une indication de la vitesse air de l'aéronef. Cette vitesse air est égale et opposée à la vitesse du vent lorsque l'aéronef est au sol et à l'arrêt, notamment en attente d'un décollage. Une telle installation anémo-barométrique met classiquement en oeuvre au moins un tube de Pitot mesurant la pression totale de l'air suivant la direction longitudinale de l'aéronef et une prise de mesure de la pression statique de l'air environnant l'aéronef.

Dans ce contexte, une installation anémo-barométrique comportant par exemple deux dispositifs de mesure positionnés selon les directions longitudinale et transversale de l'aéronef pourrait fournir au pilote de l'aéronef des indications de la vitesse air de l'aéronef selon une composante longitudinale et une composante transversale et donc, une indication de l'intensité et une indication de la direction du vent lorsque l'aéronef est au sol et à l'arrêt.

Cependant, la vitesse air fournie par les anémo-baromètres conventionnels n'est pas toujours précise et fiable.

En effet, ce type d'instrument n'est pas capable de mesurer avec une bonne stabilité et une bonne précision de faibles vitesses air au-dessous de 30 noeuds (30kt). De plus, ce type d'instrument mesure la vitesse air selon une seule direction de sorte que, les mesures de l'intensité et de la direction du vent lorsque l'aéronef est au sol à l'arrêt peuvent être imprécises.

En outre, les aéronefs à voilures tournantes comportent au moins un rotor principal à axe d'entrainement en rotation sensiblement vertical assurant la sustentation, voire la propulsion de l'aéronef. De plus, de tels aéronefs à voilures tournantes peuvent également être équipés d'un dispositif anticouple comportant au moins un rotor annexe à axe d'entraînement en rotation sensiblement horizontal, tel un rotor arrière.

Par la suite, chaque rotor principal et éventuellement un rotor arrière produisent un souffle résultant de leur propre rotation pouvant perturber le flux d'air environnant l'aéronef à proximité des anémo-baromètres. De fait, la mesure de la vitesse air de l'aéronef peut être perturbée par la présence de chaque rotor principal et éventuellement d'un rotor arrière, l'effet pouvant être encore plus important lorsque l'aéronef est au sol à l'arrêt.

En conséquence, les mesures fournies par les anémo-baromètres conventionnels d'un aéronef à voilure tournante ne permettent généralement pas d'obtenir une mesure du vent précise et intègre, lorsque l'aéronef est au sol à l'arrêt.

Par ailleurs, la masse maximale autorisée au décollage d'un aéronef est considérée comme une caractéristique sécuritaire de l'aéronef et sa détermination est encadrée selon une règlementation et des exigences définies par différents organismes tels que l'« European Aviation Safety Agency » (EASA) pour la zone européenne par exemple.

Notamment, selon les exigences de l'EASA, à défaut d'avoir une mesure suffisamment précise et intègre du vent de face subi par l'aéronef, une marge de sécurité est appliquée à la vitesse du vent de face utilisée pour déterminer la masse maximale autorisée au décollage d'un aéronef. Cette marge de sécurité est supérieure ou égale à 50% de la vitesse du vent de face constatée à proximité de l'aéronef.

Dans la pratique, cette marge de sécurité est généralement égale à 50% de la vitesse du vent de face constatée à proximité de l'aéronef, la vitesse longitudinale du vent utilisée pour déterminer la masse maximale autorisée au décollage d'un aéronef étant égale alors à cette vitesse du vent de face constatée à proximité de l'aéronef divisée par deux. Cette vitesse du vent de face constatée est généralement issue d'un rapport d'observation météorologique de l'aérodrome d'où décolle l'aéronef, ce rapport ayant été réalisé avant le décollage de l'aéronef et émis de façon régulière par cet aérodrome.

Cette vitesse du vent de face constatée est mesurée sur la piste ou bien sur l'aérodrome d'où décolle l'aéronef et non systématiquement au niveau de l'aéronef. De plus, cette vitesse du vent de face constatée n'est pas mesurée au moment du décollage de l'aéronef, mais préalablement et généralement à intervalles réguliers. Cette vitesse du vent de face constatée peut avoir été mesurée par exemple plus de 30 minutes (30mn) avant le décollage de l'aéronef.

Enfin, dans le cas d'un décollage à partir d'une zone non préparée, il se peut que l'information de vent moyen ne soit pas disponible sur cette zone, mais soit disponible pour une zone plus ou moins éloignée.

Par ailleurs, dans le cas où aucune mesure de vent moyen n'est disponible, la vitesse du vent local est considérée comme nulle.

De fait, cette mesure du vent de face constatée ne correspond pas exactement aux conditions rencontrées réellement par l'aéronef au moment de son décollage. Cependant, cette marge de sécurité de 50% représente une solution fiable et sécuritaire répondant aux exigences réglementaires notamment pour les aéronefs à voilures tournantes.

Toutefois, il existe aujourd'hui des anémomètres bidirectionnels et des anémomètres multidirectionnels procurant des mesures de la vitesse air qui sont plus précises et qui peuvent également être intègres. De tels anémomètres bidirectionnels permettent notamment de définir une vitesse longitudinale et une vitesse transversale de la vitesse air de l'aéronef. Les anémomètres multidirectionnels permettent quand à eux de définir l'intensité de cette vitesse air et sa direction dans un repère local lié à l'aéronef. De plus, de tels anémomètres bidirectionnels et multidirectionnels sont également capables de mesurer de faibles vitesses air jusqu'à des valeurs nulles ou négatives.

On connait par exemple les anémomètres optiques, tels que les anémomètres LIDAR (d'après l'expression en langue anglaise « Llght Detection and Ranging »), qui permettent de mesurer la vitesse air d'un aéronef par émission/réception séquentielle à fréquence donnée d'un faisceau lumineux LASER (d'après l'expression en langue anglaise « Light Amplification by Stimulated Emission of Radiation »).

Le document WO 2014/102175 décrit ainsi un procédé et un système de détermination de la vitesse d'un aéronef par rapport à l'air en utilisant un dispositif d'anémométrie laser.

Par ailleurs, le document US 2010/0128252 décrit un procédé et un système d'optimisation de l'orientation d'un anémomètre laser.

Il existe également les anémomètres ultrasoniques, tels que l'anémomètre décrit par le document US4031756, qui permettent de mesurer la vitesse air d'un aéronef par émission/réception d'ondes ultrasoniques.

En outre, le document EP 2799890 décrit un procédé et un système de détermination de la vitesse d'un aéronef par rapport à l'air en se basant notamment sur la position d'autres aéronefs situés à proximité.

Enfin, le document FR 2988851 décrit un procédé et un système de détermination d'un état de crédibilité des mesures d'un capteur d'incidence d'un aéronef.

La présente invention a alors pour objet de proposer un procédé et un dispositif permettant de s'affranchir des limitations mentionnées ci-dessus, en réduisant la marge de sécurité utilisée pour déterminer la masse maximale autorisée au décollage de l'aéronef selon la vitesse du vent de face subi par l'aéronef lors de son décollage. Le principe de cette invention vise à déterminer de façon précise et intègre cette vitesse du vent de face réellement subi par l'aéronef et de la prendre en compte afin d'optimiser la masse maximum autorisée au décollage de cet aéronef, améliorant ainsi les performances de l'aéronef au décollage et particulièrement sa charge utile sans dégrader la sécurité du vol de l'aéronef.

Le principe de cette invention consiste à fournir des mesures suffisamment intègres et précises de la vitesse du vent subi par l'aéronef à l'aide d'un ou plusieurs anémomètres multidirectionnels embarqués sur l'aéronef, puis à réaliser une consolidation de ces mesures du vent avec des informations d'observation et de prévision météorologique.

Selon l'invention, un procédé de détermination de la vitesse du vent à prendre en compte pour déterminer la masse maximale autorisée au décollage d'un aéronef est destiné à un aéronef et plus particulièrement à un aéronef à voilure tournante. Un tel aéronef comporte au moins un moyen de mesures anémométriques multidirectionnels, au moins un moyen de réception d'informations d'observation et de prévision météorologique, au moins un moyen de consolidation permettant de consolider les différentes mesures et au moins un moyen de visualisation.

Ce procédé est remarquable en ce qu'il comporte les étapes suivantes :
- on détermine une première valeur de cap dans un repère terrestre,
- on mesure au moins une seconde valeur courante TASᵢₙₛₜ de la vitesse du vent local au niveau de l'aéronef selon une direction prédéfinie, la direction prédéfinie étant une direction correspondant à la première valeur de cap,
- on reçoit des premières informations d'observation météorologique et des secondes informations de prévision météorologique de la zone où se situe l'aéronef ou bien d'une zone proche,
- on calcule une vitesse mesurée TASₘₑₛ du vent local selon la direction prédéfinie à partir d'au moins une seconde valeur courante TASᵢₙₛₜ de la vitesse du vent local,
- on calcule une vitesse observée TAS_{obs} du vent local selon la direction prédéfinie à partir des premières informations d'observation météorologique et de la première valeur de cap,
- on compare la vitesse mesurée TASₘₑₛ et la vitesse observée TAS_{obs} du vent local,
- on détermine une vitesse calculée TASp_{erfo} du vent local à prendre en compte pour déterminer la masse maximale autorisée au décollage de l'aéronef selon la direction prédéfinie et
- on affiche sur un moyen de visualisation la vitesse calculée TAS_{perfo} du vent local.

Ce procédé est destiné à un aéronef et plus particulièrement à un aéronef à voilure tournante, cet aéronef étant à l'arrêt, par exemple au sol ou bien sur une plateforme de décollage supposée fixe, en attente d'un décollage.

La première valeur de cap caractérise une direction prédéfinie dans un repère terrestre pendant le décollage de l'aéronef.

De préférence, la première valeur de cap est égale au cap instantané de l'aéronef. Dans ce cas, la direction prédéfinie est une direction longitudinale d'extension de l'aéronef qui est une direction privilégiée de l'aéronef.

En effet, un aéronef comporte trois directions privilégiées, une direction longitudinale d'extension de l'aéronef identifiée selon un axe X s'étendant entre l'avant et l'arrière de l'aéronef, une direction verticale d'extension de l'aéronef identifiée selon un axe Z s'étendant entre le sommet et la base de l'aéronef, une direction transversale d'extension de l'aéronef identifiée selon un axe Y s'étendant entre les bords latéraux de l'aéronef. Les axes X, Y et Z définissent ainsi un repère (X,Y,Z) local orthonormé identifiant les axes de progression de l'aéronef, ce repère (X,Y,Z) étant lié à l'aéronef.

Par ailleurs, la direction longitudinale d'extension correspond généralement à l'axe de roulis de l'aéronef, la direction transversale d'extension à son axe de tangage et la direction verticale d'extension à son axe de lacet. On rappelle concernant les orientations typiques d'extension de l'aéronef, que les notions de « horizontal », de « vertical » et de « transversal » sont des notions relatives classiquement considérées par rapport à la position de l'aéronef considéré au sol.

Par suite, la seconde valeur courante TASᵢₙₛₜ de la vitesse du vent local selon la direction prédéfinie correspond en fait à la vitesse longitudinale du vent local, c'est à dire selon la direction longitudinale d'extension de l'aéronef en attente de décollage. De même, la vitesse mesurée TASₘₑₛ, la vitesse observée TAS_{obs} et la vitesse calculée TAS_{perfo} correspondent également à des vitesses longitudinales du vent local vis-à-vis de de l'aéronef en attente de décollage.

Cette première valeur de cap peut être déterminée par l'instrumentation de bord de l'aéronef, voire par un pilote ou bien un membre de l'équipage de l'aéronef. En effet l'aéronef peut comporter en plus d'un compas de secours, au moins un moyen de détermination du cap tel un dispositif AHRS pour l'expression en langue anglaise « Attitude and Heading Reference System ». Un tel dispositif permet notamment de déterminer l'attitude et le cap gyro-magnétique instantané de l'aéronef. L'attitude caractérise les positions angulaires de l'aéronef autour de ses axes de roulis, de tangage et de lacet. Cette première valeur de cap est alors déterminée automatiquement par au moins un moyen de détermination du cap et est égale au cap instantané de l'aéronef.

Cependant, la première valeur de cap peut être différente du cap instantané de l'aéronef et correspondre à un cap de décollage que prendra très rapidement l'aéronef après le décollage, ce cap de décollage pouvant par exemple être imposé par l'environnement de la zone de décollage de l'aéronef. Dans ce cas, la première valeur de cap est définie manuellement par un pilote ou bien un membre de l'équipage de l'aéronef.

Dans ce cas, la seconde valeur courante TASᵢₙₛₜ de la vitesse du vent local selon la direction prédéfinie ne correspond pas à une vitesse longitudinale du vent local vis-à-vis de l'aéronef en attente de décollage, de même, que les vitesses mesurée TASₘₑₛ, observée TAS_{obs} et calculée TAS_{perfo}.

Cette seconde valeur courante TASᵢₙₛₜ de la vitesse du vent local selon la direction prédéfinie correspond en fait à la vitesse longitudinale du vent local vis-à-vis de l'aéronef après le décollage dès que l'aéronef aura pris un cap selon cette première valeur de cap. De même, les vitesses mesurée TASₘₑₛ, observée TAS_{obs} et calculée TAS_{perfo} correspondent à des vitesses longitudinales du vent local vis-à-vis de l'aéronef après le décollage dès qu'il aura pris le cap selon cette première valeur de cap.

Un tel aéronef comporte au moins un moyen de mesure du type anémométrique multidirectionnel capable de mesurer la vitesse du vent local, le vent local étant considéré au niveau de l'aéronef, quelle que soit la valeur de cette vitesse, et notamment pour les faibles vitesses de vent. Cette vitesse du vent local peut être décomposée en une composante longitudinale selon la direction longitudinale d'extension de l'aéronef et une composante transversale selon la direction transversale d'extension de l'aéronef. Cette composante longitudinale de la vitesse du vent influe, comme précédemment décrit, sur les performances de l'aéronef et notamment sa masse maximum autorisée au décollage.

Un moyen de mesures anémométriques peut également être un anémomètre monodirectionnel positionné selon la direction longitudinale d'extension de l'aéronef. Un tel anémomètre monodirectionnel permet ainsi de mesurer uniquement la vitesse air de l'aéronef selon sa direction longitudinale. En conséquence lorsque l'aéronef est à l'arrêt, un tel anémomètre monodirectionnel permet de mesurer uniquement la composante longitudinale de la vitesse du vent local.

Un tel anémomètre monodirectionnel ne fournissant que la vitesse longitudinal du vent local lorsque l'aéronef est en attente de décollage peut alors être utilisé par le procédé selon l'invention uniquement lorsque la première valeur de cap est égale au cap instantané de l'aéronef.

De préférence, le moyen de mesures anémométriques est un anémomètre bidirectionnel ou bien multidirectionnel, qui peut alors être utilisé quel que soit cette première valeur de cap.

Un anémomètre bidirectionnel équipant un aéronef permet de mesurer la vitesse du vent selon deux directions qui sont généralement la direction longitudinale d'extension et la direction transversale d'extension de l'aéronef. Un tel anémomètre bidirectionnel mesure ainsi la composante longitudinale et la composante transversale de la vitesse du vent local lorsque l'aéronef est au sol à l'arrét.

En outre, un écart peut exister entre les deux directions réelles de mesure de cet anémomètre bidirectionnel installé sur l'aéronef et les directions longitudinale et transversale d'extension de l'aéronef. Cet écart peut être facilement quantifié lors de tests. Avantageusement, les vitesses du vent mesurées selon les deux directions réelles de mesure peuvent alors être corrigées en fonction de cet écart afin de fournir réellement la vitesse longitudinale et la vitesse transversale du vent local selon les directions privilégiées de l'aéronef.

Un anémomètre multidirectionnel permet quant à lui de définir d'une part l'intensité de la vitesse du vent local et d'autre part sa direction dans un repère lié à cet anémomètre multidirectionnel lorsque l'aéronef est à l'arrêt. En outre, cet anémomètre multidirectionnel est installé sur l'aéronef et donc référencé par rapport à l'aéronef. De fait, une relation existe entre ce repère lié à cet anémomètre et les directions privilégiées de l'aéronef. Par suite, un tel anémomètre multidirectionnel installé sur l'aéronef fournit la composante longitudinale et la composante transversale de la vitesse du vent local selon les directions privilégiées de l'aéronef.

De la sorte, la vitesse du vent local mesurée par un anémomètre bidirectionnel ou multidirectionnel est connue dans un plan lié à l'aéronef et formé par les directions longitudinale et transversale de l'aéronef.

De fait, si la première valeur de cap est égale au cap instantané de l'aéronef, la seconde valeur courante TASᵢₙₛₜ de la vitesse du vent local est égale à la composante longitudinale de la vitesse du vent local mesurée.

Par contre, si la première valeur de cap est différente du cap instantané de l'aéronef, la seconde valeur courante TASᵢₙₛₜ de la vitesse du vent local est égale à une projection sur la direction prédéfinie de la vitesse du vent local mesurée.

Cette direction prédéfinie doit alors être caractérisée par rapport à la direction longitudinale de l'aéronef afin de déterminer cette seconde valeur courante TASᵢₙₛₜ. Cette direction prédéfinie peut en fait être caractérisée par un gisement, c'est-à-dire l'angle formé par cette direction prédéfinie avec la direction longitudinale de l'aéronef.

De fait, le cap instantané de l'aéronef correspondant à la direction longitudinale de l'aéronef doit également être déterminé afin de calculer ce gisement de la direction prédéfinie par rapport à la direction longitudinale d'extension de l'aéronef.

Ce cap instantané de l'aéronef peut comme énoncé précédemment être déterminé par un pilote ou bien un membre de l'équipage de l'aéronef, par exemple à l'aide d'un compas. Ce cap instantané de l'aéronef peut également être déterminé automatiquement par au moins un moyen de détermination du cap équipant l'aéronef.

De plus, dans le cadre du procédé selon l'invention, chaque moyen de mesures anémométriques est également capable de mesurer de faibles vitesses longitudinales du vent jusqu'à des valeurs nulles ou négatives et est donc opérationnel pendant la phase de décollage de l'aéronef.

Afin d'assurer un niveau suffisant de sûreté de fonctionnement du procédé selon l'invention, une probabilité d'erreurs non signalées prédéfinie et une précision prédéterminée sont attachées à chaque mesure de la vitesse du vent local fournie par un moyen de mesures anémométriques.

La probabilité d'erreurs non signalées désignée également par l'expression « taux de défaillance » est le nombre de secondes valeurs courantes TASᵢₙₛₜ fausses non détectées susceptibles d'être fournies par un moyen de mesures anémométriques sur une période d'une heure. Une seconde valeur courante TASᵢₙₛₜ est considérée fausse lorsque sa différence avec la vitesse réelle du vent local est supérieure à la précision prédéterminée. La probabilité d'erreurs non signalées et la précision prédéterminée caractérisent ainsi la précision et l'intégrité de la seconde valeur courante TASᵢₙₛₜ. La précision prédéterminée prend en compte l'ensemble des sources d'imprécision comme par exemple les erreurs de précision liées directement au moyen de mesures anémométriques ou bien les erreurs liées à l'intégration du moyen de mesures anémométriques dans l'aéronef.

Par ailleurs, la probabilité d'erreurs non signalées prédéfinie peut être intrinsèque au moyen de mesures anémométriques qui permet seul d'obtenir une seconde valeur courante TASᵢₙₛₜ de la vitesse du vent local précise et intègre.

L'utilisation de plusieurs moyens de mesures anémométriques peut également permettre de consolider les mesures de la vitesse du vent local par des méthodes connues de redondance de ces mesures et/ou de surveillance et/ou par des tests de cohérence, améliorant ainsi l'intégrité de ces mesures afin d'atteindre la probabilité d'erreurs non signalées prédéfinie. L'ensemble des moyens de mesures anémométriques fournit ainsi conjointement une seconde valeur courante TASᵢₙₛₜ de la vitesse du vent local qui est précise et intègre.

Ainsi, selon le procédé de détermination de la vitesse du vent à prendre en compte pour déterminer la masse maximale autorisée au décollage d'un aéronef, on peut mesurer une seconde valeur courante TASᵢₙₛₜ de la vitesse du vent local au niveau de l'aéronef précise et intègre. Cette seconde valeur courante TASᵢₙₛₜ caractérise la vitesse instantanée du vent local au niveau de l'aéronef.

Par exemple, la précision prédéterminée est égale à 2kt pour la seconde valeur courante TASᵢₙₛₜ de la vitesse du vent local.

Un moyen de mesures anémométriques répondant à ces critères de probabilité d'erreurs non signalées prédéfinie et de précision prédéterminée et capable de mesurer de faibles vitesses du vent est par exemple un anémomètre optique tel qu'un anémomètre LIDAR utilisant un faisceau LASER.

L'aéronef comporte également au moins un moyen de réception d'informations d'observation et de prévision météorologique à proximité de l'aéronef. L'aéronef peut ainsi recevoir des premières informations sur les observations météorologiques effectuées sur la zone où se trouve l'aéronef ou bien une zone proche sur une période de temps passée. De même, l'aéronef peut recevoir des secondes informations sur les prévisions météorologiques pour la zone où se trouve l'aéronef ou bien pour une zone proche sur une période de temps future.

Ces informations d'observation et de prévision météorologique comportent notamment des données atmosphériques, telles que le vent (vitesse et direction), la pression atmosphérique et la température. Ces informations d'observation et de prévision peuvent avoir des structures similaires et comporter des données atmosphériques équivalentes, et généralement sous le même format, observées dans le passé et prévues pour le futur.

Les premières informations d'observation météorologique contiennent également le lieu, la période de l'observation et une date d'émission ainsi que des remarques et des données additionnelles éventuelles sur des changements observés, caractérisant notamment si le vent était stable ou non en vitesse et/ou direction sur cette période d'observation.

De même, les secondes informations de prévision météorologique contiennent également le lieu, une période de validité de la prévision et une date d'émission ainsi que des remarques et des données additionnelles éventuelles sur des changements attendus, caractérisant notamment si le vent sera stable ou non en vitesse et/ou direction pour cette période de validité.

De fait, au cours du procédé de détermination de la vitesse du vent à prendre en compte pour déterminer la masse maximale autorisée au décollage d'un aéronef selon l'invention, on peut recevoir des premières informations d'observation météorologique et des secondes informations de prévision météorologique de la zone où se situe l'aéronef ou bien d'une zone proche.

Un moyen de réception d'informations d'observation et de prévision météorologique peut être classiquement une radio équipant l'aéronef grâce à laquelle un pilote ou bien un membre de l'équipage de l'aéronef écoute un bulletin météorologique fournissant ces informations d'observation et de prévision météorologique. Le pilote ou bien un membre de l'équipage doit choisir la fréquence radio qui émet le bulletin météorologique correspondant à la localisation de l'aéronef. Cette fréquence radio, qui constitue ainsi à une information de localisation de l'aéronef, correspond généralement à l'aérodrome sur lequel se situe l'aéronef ou bien à proximité duquel il se situe. Le pilote ou bien un membre de l'équipage vérifie également que ce bulletin météorologique correspond bien à la date courante. On entend par « date courante » la date du jour et l'heure.

La plupart des aérodromes et des aéroports fournissent généralement un tel bulletin météorologique par radio.

Les bulletins météorologiques peuvent également être fournis via un moyen de transmission de données numériques air-sol.

La plupart des aérodromes et des aéroports fournissent aujourd'hui des rapports d'observation météorologique et de prévision météorologique sous forme de données numériques et répondant à un code international concernant son contenu et le format de ce contenu.

Un rapport d'observation météorologique généralement utilisé pour l'aviation est connu sous l'acronyme METAR pour l'expression en langue anglaise « METeorological Aerodrome Report ». Ce rapport METAR est formaté selon un code international développé par les membres de l'Organisation de l'Aviation Civile Internationale (OACI) et est approuvé par l'Organisation Météorologique Mondiale (OMM). Ce rapport METAR fournit un rapport d'observation météorologique pour un aérodrome donné. Un rapport METAR peut être envoyé toutes les demi-heures ou toutes les heures, suivant les aérodromes. De plus, en cas d'observations particulières telles que des variations du vent en vitesse et/ou en direction notamment, un rapport spécial est émis.

De même, un rapport de prévision météorologique est connu sous l'acronyme TAF pour l'expression en langue anglaise « Terminal Aerodrome Forecast ». Ce rapport TAF utilise un format similaire au format du rapport METAR et fournit une prévision météorologique valide pour 6 à 30 heures pour un aérodrome donné. En l'absence de ce rapport TAF, notamment pour les aérodromes à usage local ou récréatif, des prévisions régionales destinées à l'aéronautique peuvent être utilisées en remplacement de ce rapport TAF. Un rapport TAF fournit en particulier une prédiction du vent, en décrivant notamment, les tendances futures. Notamment, des changements de vent prévus, que ce soit en vitesse ou en direction sont décrits en utilisant des indicateurs définis tels que « BECMG » pour « becoming » en langue anglaise signifiant « devenant », « TEMPO » pour « temporary » en langue anglaise signifiant « temporaire » ou « VRB » pour « variable » en langue anglaise signifiant « variable ».

Les rapports TAF et METAR ont donc des structures similaires et comportent notamment les éléments suivants :
- un code correspondant au nom du rapport TAF / METAR
- le code OACI de l'aérodrome correspondant au rapport TAF / METAR,
- la date de l'observation ou de la prédiction et une période de validité dans le cas d'un rapport TAF,
- la direction et la vitesse du vent,
- la visibilité horizontale,
- les nuages,
- la température atmosphérique et le point de rosée,
- la pression atmosphérique au niveau de la mer,
- des remarques et données additionnelles éventuelles, en particulier en cas de changements attendus.

De préférence, le moyen de réception d'informations d'observation et de prévision météorologique est un récepteur de données numériques capable de recevoir les rapports METAR et les rapports TAF les plus proches de l'aéronef.

De fait, selon le procédé selon l'invention, les premières informations sont issues d'un rapport METAR et les secondes informations sont issues d'un rapport TAF. Avantageusement, les premières informations et les secondes informations sont issues respectivement d'un rapport METAR et d'un rapport TAF de façon automatique par le procédé selon l'invention, sans intervention d'un pilote ou d'un membre de l'équipage de l'aéronef.

Par ailleurs, l'aéronef peut également comporter au moins un moyen de localisation tel un moyen de réception satellitaire GNSS pour la désignation en langue anglaise « Global Navigation Satellite System ». Un tel moyen de localisation permet de recevoir des informations de localisation de l'aéronef dans un repère terrestre afin de définir avec précision la position de l'aéronef. De plus, un tel moyen de localisation permet également de recevoir des informations de datation afin de définir avec précision la date courante.

Grâce à ces informations de localisation et de datation, le procédé selon l'invention peut choisir les premières informations d'observation météorologique et les secondes informations de prévision météorologique à utiliser selon leur provenance et leur date d'émission, notamment lorsque ces informations sont issues respectivement d'un rapport METAR et d'un rapport TAF.

Le procédé selon l'invention peut également vérifier que ces premières et secondes informations concernent effectivement la zone où se situe l'aéronef ou bien une zone proche et sont bien les informations disponibles les plus récentes par rapport à la date courante.

L'aéronef est aussi muni d'au moins un moyen de consolidation, chaque moyen de consolidation pouvant comporter au moins un calculateur et au moins un moyen de stockage.

Un moyen de stockage peut stocker des informations telles que les premières informations d'observation météorologique et les secondes informations de prévision météorologique ainsi que des données telles que des secondes valeurs courantes TASᵢₙₛₜ de la vitesse du vent local et chaque première valeur de cap. Un moyen de stockage peut également stocker des instructions que le calculateur peut mettre en oeuvre en utilisant les informations et les données stockées.

Il est important, voire essentiel pour des raisons de sécurité, que le pilote d'un aéronef connaisse la vitesse du vent local selon la direction longitudinale d'extension de l'aéronef lors du décollage, en particulier pour connaître la vitesse du vent de face ou bien du vent arrière que subit l'aéronef. On connait la seconde valeur courante TASᵢₙₛₜ de la vitesse du vent local selon la direction prédéfinie ainsi que la première valeur de cap dans un repère terrestre caractérisant cette direction prédéfinie.

Ainsi, au cours du procédé de détermination de la vitesse du vent à prendre en compte pour déterminer la masse maximale autorisée au décollage d'un aéronef, on peut calculer une vitesse mesurée TASₘₑₛ du vent local selon la direction prédéfinie à partir d'une seule seconde valeur courante TASᵢₙₛₜ de la vitesse du vent local.

Cette vitesse mesurée TASₘₑₛ du vent local est alors égale à la seconde valeur courante TASᵢₙₛₜ et correspond ainsi à la vitesse instantanée mesurée du vent local selon la direction prédéfinie.

Il est également possible, pour prendre en compte les variations du vent local pendant une durée prédéterminée, d'utiliser les secondes valeurs courantes TASᵢₙₛₜ mesurées selon la direction prédéfinie pendant cette durée prédéterminée. Dans ce but, on peut calculer une vitesse mesurée moyenne TAS_{moy} du vent local selon la direction prédéfinie qui est la moyenne des secondes valeurs courantes TASᵢₙₛₜ de la vitesse du vent local pendant la durée prédéterminée. La vitesse mesurée TASₘₑₛ du vent local peut alors être égale à la vitesse mesurée moyenne TAS_{moy} et correspond ainsi à une vitesse moyenne du vent local selon cette direction prédéfinie pendant la durée prédéterminée.

La durée prédéterminée est par exemple égale à 2 mn.

Cette vitesse mesurée TASₘₑₛ du vent local est dite « mesurée » car elle résulte d'un calcul basé sur des valeurs mesurées de la vitesse du vent au niveau de l'aéronef.

En outre, comme évoqué précédemment, les secondes valeurs courantes TASᵢₙₛₜ de la vitesse du vent local sont mesurées avec une précision prédéterminée. L'objet du procédé selon l'invention est d'optimiser la masse maximale autorisée au décollage de l'aéronef et, comme vu précédemment, cette masse augmente si la vitesse du vent de face augmente également lors de la phase de décollage.

En conséquence, pour aller dans le sens de la sécurité et ne pas surévaluer la vitesse du vent local et, par suite, la masse maximale autorisée au décollage de l'aéronef, on peut alors corriger chaque seconde valeur courante TASᵢₙₛₜ de la vitesse du vent local avec cette précision prédéterminée. La seconde valeur courante TASᵢₙₛₜ à prendre en compte est ainsi égale à la seconde valeur courante TASᵢₙₛₜ mesurée à laquelle est soustraite la précision prédéterminée. Par exemple, si la précision prédéterminée est égale à 2kt, la seconde valeur courante TASᵢₙₛₜ est égale à la seconde valeur courante TASᵢₙₛₜ mesurée moins 2kt.

Au cours du procédé de détermination de la vitesse du vent à prendre en compte pour déterminer la masse maximale autorisée au décollage d'un aéronef, on peut également calculer une vitesse observée TAS_{obs} du vent local. Les premières informations d'observation météorologique contiennent une vitesse observée moyenne du vent local et une direction observée moyenne du vent local à proximité de l'aéronef dans un repère terrestre. Les premières informations d'observation météorologique permettent ainsi de définir un vecteur de la vitesse du vent local dans ce repère terrestre. La première valeur de cap caractérise la direction prédéfinie dans un repère terrestre. Il est alors possible, en projetant ce vecteur de la vitesse du vent observée sur la direction prédéfinie de calculer la vitesse observée TAS_{obs} du vent local selon la direction prédéfinie.

Cette vitesse observée TAS_{obs} du vent local est dite « observée » car elle résulte d'un calcul basé sur une vitesse observée moyenne et une direction observée moyenne du vent contenues dans les premières informations d'observation météorologique.

Afin d'obtenir cette vitesse observée moyenne du vent local et cette direction observée moyenne du vent local, on peut décoder de façon automatique les données numériques reçues par le moyen de réception d'informations d'observation et de prévision météorologique dans le cas où il s'agit d'un récepteur de données numériques. On peut ensuite extraire, toujours de façon automatique et sans intervention d'un pilote ou bien d'un membre de l'équipage de l'aéronef, la vitesse observée moyenne du vent local et la direction observée moyenne du vent local des premières informations d'observation météorologique.

Par contre, lorsque le moyen de réception d'informations d'observation et de prévision météorologique est une radio, un pilote ou bien un membre de l'équipage de l'aéronef doit extraire la vitesse observée moyenne du vent local et la direction observée moyenne du vent local des premières informations d'observation météorologique.

Par la suite, au cours du procédé selon l'invention, on peut comparer la vitesse mesurée TASₘₑₛ et la vitesse observée TAS_{obs} du vent local, puis déterminer une vitesse calculée TAS_{perfo} du vent local à prendre en compte pour déterminer la masse maximale autorisée au décollage selon la direction prédéfinie. Les critères de comparaison sont la vitesse observée TAS_{obs} du vent local, calculée à partir des premières informations d'observation météorologique, ainsi que cette vitesse observée TAS_{obs} du vent local divisée par deux qui est aujourd'hui le critère défini par la réglementation et, de fait, majoritairement utilisé pour calculer la masse maximale autorisée au décollage.

On peut alors distinguer principalement trois cas lorsque la vitesse mesurée TASₘₑₛ et la vitesse observée TAS_{obs} sont positives, la vitesse mesurée TASₘₑₛ pouvant être supérieure ou égale à la vitesse observée TAS_{obs}, inférieure ou égale à la vitesse observée divisée par deux TAS_{obs}/2 ou bien strictement comprise entre la vitesse observée TAS_{obs} et cette vitesse observée divisée par deux TAS_{obs}/2. On considère par hypothèse qu'une vitesse du vent local selon la direction prédéfinie est positive lorsque le vent local constitue au moins partiellement un vent de face par rapport à l'aéronef. Inversement, une vitesse du vent local selon la direction prédéfinie est négative lorsque le vent local constitue au moins partiellement un vent arrière par rapport à l'aéronef.

Ainsi, lorsque la vitesse mesurée TASₘₑₛ est supérieure ou égale à la vitesse observée TAS_{obs}, la vitesse calculée TAS_{perfo} est égale à la vitesse observée TAS_{obs}. En effet, la vitesse mesurée TASₘₑₛ du vent local au niveau de l'aéronef est supérieure aux observations effectuées et donc largement supérieure à la vitesse observée divisée par deux TAS_{obs}/2 qui est traditionnellement utilisée pour déterminer la masse maximale autorisée au décollage. De fait, il serait pénalisant pour les performances de l'aéronef d'utiliser la vitesse observée divisée par deux TAS_{obs}/2 pour déterminer la masse maximale autorisée au décollage de l'aéronef alors que la vitesse mesurée TASₘₑₛ est supérieure ou égale à la vitesse observée TAS_{obs}.

En conséquence, il est alors possible de réduire la marge de sécurité appliquée à la vitesse du vent local. Avantageusement, la vitesse mesurée TASₘₑₛ du vent local au niveau de l'aéronef étant supérieure à la vitesse observée TAS_{obs} et pour garder une marge de sécurité par rapport à la vitesse mesurée, cette vitesse observée TAS_{obs} peut être utilisée pour déterminer la masse maximale autorisée au décollage.

Par contre, lorsque la vitesse mesurée TASₘₑₛ est strictement comprise entre la vitesse observée TAS_{obs} et cette vitesse observée divisée par deux TAS_{obs}/2, c'est-à-dire, inférieure à la vitesse observée TAS_{obs} et supérieure à la vitesse observée divisée par deux TAS_{obs}/2, la vitesse calculée TAS_{perfo} est égale à la vitesse mesurée TASₘₑₛ. En effet, la vitesse mesurée TASₘₑₛ du vent local est inférieure à la vitesse observée TAS_{obs}, mais supérieure à la vitesse observée divisée par deux TAS_{obs}/2. De fait, il serait là encore pénalisant d'utiliser la vitesse observée divisée par deux TAS_{obs}/2 pour déterminer la masse maximale autorisée au décollage alors que la vitesse mesurée TASₘₑₛ est supérieure à cette vitesse observée divisée par deux TAS_{obs}/2.

En conséquence, il est possible de réduire de nouveau la marge de sécurité appliquée à la vitesse du vent local. Avantageusement, la vitesse mesurée TASₘₑₛ du vent local étant supérieure à la vitesse observée divisée par deux TAS_{obs}/2 tout en étant inférieure à la vitesse observée TAS_{obs}, la vitesse mesurée TASₘₑₛ peut être utilisée pour déterminer la masse maximale autorisée au décollage.

Enfin, lorsque la vitesse mesurée TASₘₑₛ est inférieure ou égale à la vitesse observée divisée par deux TAS_{obs}/2, la vitesse calculée TAS_{perfo} est égale à la vitesse observée divisée par deux TAS_{obs}/2. Dans ce cas, il serait pénalisant pour les performances de l'aéronef d'utiliser la vitesse mesurée TASₘₑₛ qui est inférieure ou égale à la vitesse observée divisée par deux TAS_{obs}/2 pour déterminer la masse maximale autorisée au décollage de l'aéronef. En conséquence et en conformité avec la réglementation, la vitesse observée divisée par deux TAS_{obs}/2 peut être utilisée pour déterminer la masse maximale autorisée au décollage.

En outre, un quatrième cas est possible lorsqu'aucune vitesse mesurée TASₘₑₛ n'est fournie. La vitesse calculée TAS_{perfo} est alors égale à la vitesse observée divisée par deux TAS_{obs}/2. Aucune vitesse mesurée TASₘₑₛ n'est fournie par exemple suite à une défaillance du moyen de mesures anémométriques.

Toutefois, ces cas sont utilisables uniquement si le vent local observé ne présente aucune instabilité, ni que les prévisions ne prédisent une telle instabilité. Avantageusement, un premier critère d'instabilité du vent local peut être extrait des premières informations d'observation météorologique et un second critère d'instabilité du vent local peut être extrait des secondes informations de prévision météorologique.

Par suite, lorsque ce premier critère d'instabilité et/ou ce second critère d'instabilité du vent local signale(nt) une instabilité du vent local observé ou bien un risque d'instabilité du vent local prévu, la vitesse calculée TAS_{perfo} du vent local est égale à la vitesse observée divisée par deux TAS_{obs}/2. Ainsi, une marge de sécurité de 50% est utilisée conformément à la réglementation.

A contrario, lorsque ce premier critère d'instabilité et ce second critère d'instabilité du vent local ne signalent aucune instabilité, ni risque d'instabilité du vent local, les cas précédemment évoqués s'appliquent.

Par contre, dans le cas où aucune vitesse observée TAS_{obs} n'est disponible, la vitesse calculée TAS_{perfo} est égale à la vitesse mesurée TASₘₑₛ divisée par deux. Aucune vitesse observée TAS_{obs} n'est disponible par exemple parce qu'aucun rapport d'observation météorologique n'a été reçu par le moyen de réception d'informations d'observation et de prévision météorologique.

Par ailleurs, si aucune vitesse mesurée TASₘₑₛ ni aucune vitesse observée TAS_{obs} n'est disponible, la vitesse calculée TAS_{perfo} est nulle.

En outre, lorsque la vitesse mesurée TASₘₑₛ et/ou la vitesse observée TAS_{obs} sont négatives, la vitesse calculée TAS_{perfo} est égale à la valeur minimale parmi la vitesse mesurée TASₘₑₛ et la vitesse observée TAS_{obs}. En effet, un vent arrière subi par l'aéronef est généralement défavorable pour les performances de l'aéronef, et en particulier lors de son décollage. De fait, afin de se placer dans la situation la plus sécuritaire, c'est-à-dire qui prend en compte la valeur absolue de la vitesse de ce vent arrière que peut subir l'aéronef la plus importante, la vitesse calculée TAS_{perfo} est égale à la valeur minimale algébrique parmi la vitesse mesurée TASₘₑₛ et la vitesse observée TAS_{obs}, au moins une des vitesses mesurée TASₘₑₛ et observée TAS_{obs} étant négatives.

Un premier critère d'instabilité est généralement caractérisé par l'émission par l'aérodrome concerné d'un bulletin spécial sur la fréquence radio qui lui est attachée ou bien d'un rapport spécial dans le cadre, par exemple, d'un rapport METAR.

Afin d'obtenir le premier critère d'instabilité du vent local, on peut l'extraire au cours du procédé selon l'invention de façon automatique des données numériques reçues par le moyen de réception d'informations d'observation et de prévision météorologique et correspondant aux premières informations d'observation météorologique. Ce premier critère d'instabilité du vent local correspond par exemple à l'émission d'un rapport spécial.

Par contre, lorsque le moyen de réception d'informations d'observation et de prévision météorologique est une radio, un pilote ou bien un membre de l'équipage de l'aéronef doit prendre en compte ce premier critère d'instabilité du vent local correspondant à l'émission d'un bulletin spécial.

Afin d'obtenir le second critère d'instabilité du vent local, on peut l'extraire au cours du procédé selon l'invention de façon automatique des données numériques reçues par le moyen de réception d'informations d'observation et de prévision météorologique et correspondant aux secondes informations de prévision météorologique, après avoir préalablement décoder de façon automatique ces secondes informations. Ce second critère d'instabilité est la présence dans les secondes informations, dans le cadre d'un rapport TAF, d'au moins un indicateur tel que « BECMG », « TEMPO » ou « VRB » caractérisant une instabilité du vent local prévu.

Par contre, lorsque le moyen de réception d'informations d'observation et de prévision météorologique est une radio, un pilote ou bien un membre de l'équipage de l'aéronef doit prendre en compte ce second critère d'instabilité du vent local caractérisé par la présence d'un de ces indicateurs dans les secondes informations de prévision météorologique.

L'aéronef comporte également au moins un moyen de visualisation, tel un écran d'affichage par exemple. Au cours du procédé de détermination de la vitesse du vent à prendre en compte pour déterminer la masse maximale autorisée au décollage d'un aéronef selon l'invention, on peut ainsi afficher sur ce moyen de visualisation la vitesse calculée TAS_{perfo} du vent local à utiliser pour déterminer la masse maximale autorisée au décollage de l'aéronef.

Par ailleurs, au cours du procédé selon l'invention, on peut également calculer, de façon connue, cette masse maximale autorisée au décollage de l'aéronef en fonction de la vitesse calculée TAS_{perfo} du vent local, puis on l'affiche sur le moyen de visualisation. Cette masse maximale autorisée au décollage de l'aéronef est notamment définie par des abaques fournis par le constructeur de l'aéronef.

De la sorte, le procédé selon l'invention permet d'une part de déterminer la vitesse du vent à prendre en compte pour calculer la masse maximale autorisée au décollage d'un aéronef qui soit la plus grande possible selon les conditions météorologiques, sans dégrader les exigences de sécurité, et d'autre part de déterminer cette masse maximale autorisée au décollage.

Avantageusement, ce procédé permet de consolider des mesures du vent local d'au moins un moyen de mesures anémométriques embarqué avec des observations et des prévisions météorologiques permettant, si les conditions météorologiques sont stables et favorables, d'augmenter les capacités au décollage de l'aéronef.

De plus, le procédé selon l'invention est destiné de préférence à un aéronef à voilure tournante. Un aéronef à voilure tournante comporte au moins un rotor principal et éventuellement un rotor arrière.

Chaque moyen de mesures anémométriques peut être positionné sur l'aéronef afin que chaque seconde valeur courante TASᵢₙₛₜ de la vitesse du vent local soit mesurée dans une première zone non perturbée par le rotor principal ou bien par le rotor arrière. Cependant, cette première zone est positionnée afin que chaque seconde valeur courante TASᵢₙₛₜ soit représentative de l'aérologie environnant l'aéronef.

Chaque moyen de mesures anémométriques peut également être positionné sur l'aéronef dans une seconde zone perturbée par le rotor principal ou bien par le rotor arrière. Chaque seconde valeur courante TASᵢₙₛₜ est alors corrigée afin de prendre en compte les perturbations induites par le rotor principal et/ou par le rotor arrière et être ainsi représentative de l'aérologie environnant réellement l'aéronef.

Un moyen de mesures anémométriques peut être positionné dans l'environnement immédiat de l'aéronef, au sommet d'une dérive arrière de l'aéronef ou bien au dessus d'un mât du rotor principal de l'aéronef par exemple.

En outre, afin de permettre au pilote de l'aéronef d'avoir une connaissance complète de la situation, le procédé selon l'invention peut également afficher sur le moyen de visualisation des données intermédiaires calculées par ce procédé, par exemple :
- la vitesse mesurée moyenne TAS_{moy} du vent local,
- une direction moyenne du vent local,
- la vitesse observée moyenne du vent local,
- la direction observée moyenne du vent local, et
- des variations de la vitesse observée moyenne et de la direction observée moyenne du vent.

La présente invention a aussi pour objet un dispositif de détermination de la vitesse du vent à prendre en compte pour déterminer la masse maximale autorisée au décollage d'un aéronef capable de mettre en oeuvre le procédé précédemment décrit. Un tel dispositif comporte :
- au moins un moyen de mesures anémométriques de la vitesse du vent local au niveau de l'aéronef,
- au moins un moyen de réception d'informations d'observation et de prévision météorologique à proximité de l'aéronef,
- au moins un moyen de consolidation, comportant au moins un calculateur et au moins un moyen de stockage, et
- au moins un moyen de visualisation.

Un tel dispositif peut également comporter au moins un moyen de détermination du cap de l'aéronef et/ au moins un moyen de localisation.

Ce dispositif est particulièrement destiné à équiper un aéronef à voilure tournante, comportant au moins un rotor principal et éventuellement un rotor arrière.

L'invention et ses avantages apparaîtront avec plus de détails dans le cadre de la description qui suit avec des exemples donnés à titre illustratif en référence aux figures annexées qui représentent :
- la figure 1, un aéronef équipé d'un dispositif selon l'invention, et
- les figures 2 et 3, deux schémas synoptiques de deux modes de fonctionnement du procédé selon l'invention.

Les éléments présents dans plusieurs figures distinctes sont affectés d'une seule et même référence.

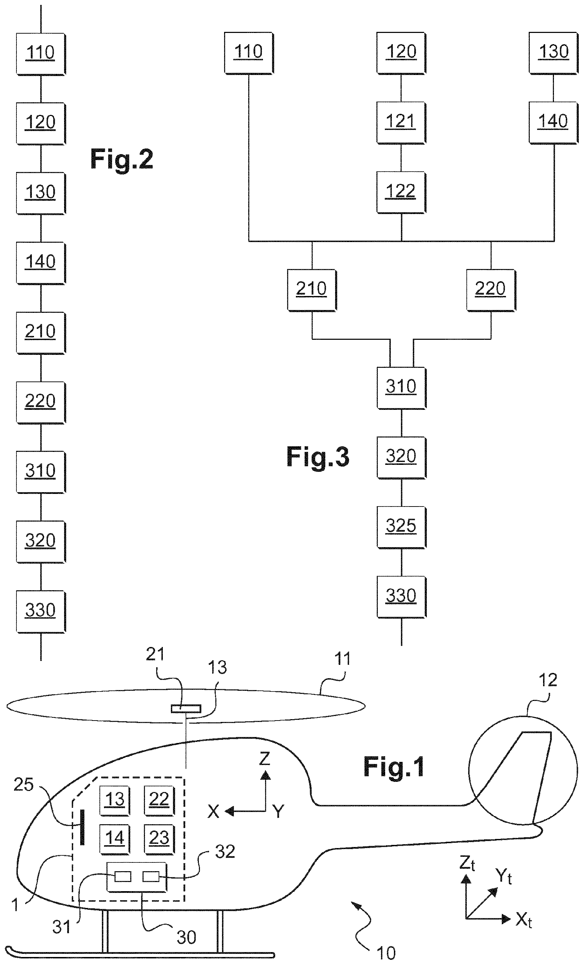

Sur la figure 1, un aéronef 10 est représenté, cet aéronef 10 comprenant un rotor principal 11 positionné au-dessus d'un fuselage et un rotor arrière 12 anticouple positionné à l'extrémité arrière d'une poutre de queue.

Un repère local (X,Y,Z) est attaché à cet aéronef 10, et plus particulièrement à son centre de gravité. Une direction longitudinale d'extension de l'aéronef 10 correspondant à l'axe X s'étend de l'avant de l'aéronef 10 vers l'arrière de l'aéronef 10. Une direction verticale d'extension de l'aéronef 10 correspondant à l'axe Z s'étend de bas en haut perpendiculairement à la direction longitudinale X. Enfin, une direction transversale d'extension de l'aéronef 10 correspondant à l'axe Y s'étend de droite à gauche perpendiculairement aux directions longitudinale X et d'élévation Z.

La direction longitudinale X est l'axe de roulis de l'aéronef 10, la direction transversale Y est son axe de tangage et la direction d'élévation Z est son axe de lacet.

L'aéronef 10 comporte également un dispositif de détermination 1 de la vitesse du vent à prendre en compte pour déterminer la masse maximale autorisée au décollage de l'aéronef 10.

Ce dispositif 1 comporte un moyen de mesures anémométriques 21 positionné au-dessus du mât 13 du rotor principal 11. Ce moyen de mesures anémométriques 21 est par exemple un anémomètre optique tel qu'un anémomètre LIDAR utilisant un faisceau LASER. Il permet de mesurer avec précision et intégrité l'intensité et la direction de la vitesse air de l'aéronef 10 dans un repère local, par exemple le repère (X,Y,Z). Ce moyen de mesures anémométriques 21 permet notamment de déterminer la vitesse longitudinale et la vitesse transversale du vent local au niveau de l'aéronef 10, cet aéronef 10 étant à l'arrêt.

Ce dispositif 1 est également muni d'un premier moyen de réception 22 d'informations d'observation météorologique et d'un second moyen de réception 23 d'informations de prévision météorologique. Chaque moyen de réception 22,23 peut recevoir sous forme de données numériques des informations d'observation ou de prévision météorologique provenant par exemple de l'aérodrome sur lequel est situé l'aéronef 10 en attente d'un décollage. Les premières informations sont par exemple issues d'un rapport METAR et les secondes informations sont issues d'un rapport TAF.

Ce dispositif 1 comporte aussi un moyen de détermination du cap 13 de l'aéronef 10 tel un dispositif AHRS et un moyen de localisation 14 tel un récepteur GNSS permettant de déterminer la position, l'attitude et le cap instantané de l'aéronef 10 dans un repère terrestre (Xₜ,Yₜ,Zₜ) ainsi qu'une date courante,

Ce dispositif 1 comporte aussi un moyen de consolidation 30, comportant un calculateur 31 et un moyen de stockage 32.

Le moyen de stockage 32 peut stocker des informations reçues par les moyens de réception 22,23 et le moyen de localisation 14 ainsi que des mesures réalisées par le moyen de mesures anémométriques 21 et le moyen de détermination du cap 13 de l'aéronef 10. Ce moyen de stockage 32 peut également stocker des instructions exécutées par le calculateur 31 en utilisant entre autres les informations et les mesures stockées.

Enfin, ce dispositif 1 comporte un moyen de visualisation 25 tel un écran d'affichage afin d'afficher des informations pour le pilote et/ou un membre de l'équipage de l'aéronef 10.

Les figures 2 et 3 représentent deux modes de fonctionnement d'un procédé de détermination de la vitesse du vent à prendre en compte pour déterminer la masse maximale autorisée au décollage d'un aéronef 10. Ce procédé permet de déterminer la vitesse du vent à prendre en compte pour déterminer la masse maximale autorisée au décollage la plus importante possible en fonction des conditions météorologiques actuelles, sans pour autant dégrader les exigences de sécurité et également de déterminer cette masse maximale autorisée au décollage.

Le dispositif 1 permet de mettre en oeuvre ces deux modes de fonctionnement du procédé de détermination de la vitesse du vent à prendre en compte pour déterminer la masse maximale autorisée au décollage d'un aéronef 10.

Ainsi, au cours d'une première étape 110, on détermine au moins une première valeur de cap dans le repère terrestre (Xₜ,Yₜ,Zₜ).

Cette première valeur de cap peut être obtenue par l'intermédiaire du moyen de détermination du cap 13 et correspond alors au cap instantané de l'aéronef 10.

Cette première valeur de cap peut également être définie manuellement par un pilote ou bien un membre de l'équipage de l'aéronef. Cette première valeur de cap peut alors être égale au cap instantané de l'aéronef 10 ou bien être différente et correspondre au cap de décollage que prendra très rapidement l'aéronef 10 après le décollage.

Cette première valeur de cap permet de définir une direction prédéfinie qui est caractérisé dans le repère terrestre (Xₜ,Yₜ,Zₜ).

Lorsque la première valeur de cap est égale au cap instantané de l'aéronef 10, la direction prédéfinie est confondue avec la direction longitudinale d'extension de l'aéronef 10.

Par contre, lorsque la première valeur de cap est différente du cap instantané de l'aéronef 10, la direction prédéfinie forme un angle avec la direction longitudinale d'extension de l'aéronef 10, cet angle correspondant au gisement de cette direction prédéfinie. Le cap instantané de l'aéronef doit alors également être connu afin de calculer ce gisement de la direction prédéfinie par rapport à la direction longitudinale d'extension de l'aéronef.

Au cours d'une seconde étape 120, on mesure au moins une seconde valeur courante TASᵢₙₛₜ de la vitesse du vent local par l'intermédiaire du moyen de mesures anémométriques 21, ce vent local étant caractérisé par une composante longitudinale et une composante transversale.

Au cours d'une troisième étape 130, on reçoit des premières informations d'observation météorologique et des secondes informations de prévision météorologique de la zone où se situe l'aéronef 10 ou bien d'une zone proche par l'intermédiaire des moyens de réception 22,23.

Ensuite, au cours d'une quatrième étape 140, on décode les premières informations d'observation météorologique afin d'extraire une vitesse observée moyenne du vent local et la direction observée moyenne du vent local ainsi qu'un premier critère d'instabilité du vent local observée. Au cours de cette quatrième étape 140, on décode également les secondes informations de prévision météorologique afin d'extraire un second critère d'instabilité du vent local prévu.

Puis, au cours d'une cinquième étape 210, on calcule une vitesse mesurée TASₘₑₛ du vent local selon la direction prédéfinie à partir d'au moins une seconde valeur courante TASᵢₙₛₜ de la vitesse du vent local par l'intermédiaire du moyen de consolidation 30.

Au cours d'une sixième étape 220, on calcule une vitesse observée TAS_{obs} du vent local selon la direction prédéfinie à partir des premières informations d'observation météorologique et de la première valeur de cap par l'intermédiaire du moyen de consolidation 30. Dans ce but, on calcule la vitesse observée TAS_{obs} du vent local selon la direction prédéfinie à partir de la vitesse observée moyenne et de la direction observée moyenne du vent local ainsi que de la première valeur de cap.

Au cours d'une septième étape 310, on compare la vitesse mesurée TASₘₑₛ et la vitesse observée TAS_{obs} du vent local par l'intermédiaire du moyen de consolidation 30.

Au cours d'une huitième étape 320, on détermine une vitesse calculée TAS_{perfo} du vent local selon la direction prédéfinie à prendre en compte pour déterminer la masse maximale autorisée au décollage de l'aéronef 10 par l'intermédiaire du moyen de consolidation 30.

Enfin, au cours d'une neuvième étape 330, on affiche la vitesse calculée TAS_{perfo} du vent local sur le moyen de visualisation 25.

Le premier mode de fonctionnement de ce procédé représenté sur la figure 2 est constitué d'un enchaînement séquentiel de ces étapes.

Cependant, il est également possible de réaliser certaines étapes de manière simultanée. Par exemple, selon le second mode de fonctionnement du procédé représenté sur la figure 3, les première, seconde et troisième étapes 110, 120, 130 peuvent être réalisées simultanément. De même, les quatrième et cinquième étapes 210,220 peuvent être réalisées simultanément.

Par ailleurs, ce second mode de fonctionnement du procédé comporte également des étapes intermédiaires.

Ainsi, après la seconde étape 120, une première étape intermédiaire 121 et une seconde étape intermédiaire 122 se déroulent. Au cours de cette première étape intermédiaire 121, on corrige chaque seconde valeur courante TASᵢₙₛₜ mesurée lors de la seconde étape 120 en lui soustrayant une précision prédéterminée. Au cours de la seconde étape intermédiaire 122, on calcule une vitesse mesurée moyenne TAS_{moy} du vent local selon la direction prédéfinie qui est la moyenne des secondes valeurs courantes TASᵢₙₛₜ mesurées lors de la seconde étape 120 pendant une durée prédéterminée.

Ensuite, au cours de la cinquième étape 210 de ce second mode de fonctionnement du procédé, on calcule la vitesse mesurée TASₘₑₛ du vent local qui est égale à la vitesse mesurée moyenne TAS_{moy} du vent local pendant la durée prédéterminée.

Par contre, au cours de la cinquième étape 210 du premier mode de fonctionnement du procédé, on calcule la vitesse mesurée TASₘₑₛ du vent local qui est égale à la seconde valeur courante TASᵢₙₛₜ. Cette vitesse mesurée TASₘₑₛ du vent local correspond alors à la vitesse instantanée mesurée du vent local.

Au cours de la septième étape 310, on compare la vitesse mesurée TASₘₑₛ et la vitesse observée TAS_{obs} du vent local en distinguant principalement trois cas lorsque la vitesse mesurée TASₘₑₛ et la vitesse observée TAS_{obs} sont positives, la vitesse mesurée TASₘₑₛ étant comparée à la vitesse observée TAS_{obs} et à la vitesse observée divisée par deux TAS_{obs}/2.

Cependant, ces trois cas ne sont applicables qu'en cas de vent local observé stable et de vent local prévu stable également, c'est-à-dire si le premier critère d'instabilité et le second critère d'instabilité ne signalent aucune instabilité du vent local observé ou bien aucun risque d'instabilité du vent local prévu.

De fait, au cours de la huitième étape 320, on détermine la vitesse calculée TAS_{perfo} du vent local selon les conditions suivantes relatives à chacun de ces trois cas.

Tout d'abord, si le premier critère d'instabilité et/ou le second critère d'instabilité signale(nt) une instabilité du vent local observé ou bien un risque d'instabilité du vent local prévu, la vitesse calculée TAS_{perfo} du vent local est égale à la vitesse observée divisée par deux TAS_{obs}/2

Ensuite, si la vitesse mesurée TASₘₑₛ est supérieure ou égale à la vitesse observée TAS_{obs}, la vitesse calculée TAS_{perfo} est égale à la vitesse observée TAS_{obs}.

Par ailleurs, si la vitesse mesurée TASₘₑₛ est strictement comprise entre la vitesse observée TAS_{obs} et cette vitesse observée divisée par deux TAS_{obs}/2, la vitesse calculée TAS_{perfo} est égale à la vitesse mesurée TASₘₑₛ.

Enfin, si la vitesse mesurée TASₘₑₛ est inférieure ou égale à la vitesse observée divisée par deux TAS_{obs}/2, la vitesse calculée TASp_{erfo} est égale à la vitesse observée divisée par deux TAS_{obs}/2.

En outre, si aucune vitesse mesurée TASₘₑₛ n'est fournie, la vitesse calculée TAS_{perfo} est égale à la vitesse observée divisée par deux TAS_{obs}/2.

Par contre, dans le cas où aucune vitesse observée TAS_{obs} n'est disponible, la vitesse calculée TAS_{perfo} est égale à la vitesse mesurée TASₘₑₛ divisée par deux.

Enfin, si aucune vitesse mesurée TASₘₑₛ ni aucune vitesse observée TAS_{obs} n'est disponible, la vitesse calculée TAS_{perfo} est égale à 0kt.

Par ailleurs, lorsque la vitesse mesurée TASₘₑₛ et/ou la vitesse observée TAS_{obs} sont négatives, la vitesse calculée TAS_{perfo} est égale à la valeur minimale parmi la vitesse mesurée TASₘₑₛ et la vitesse observée TAS_{obs}.

De plus, ce second mode de fonctionnement du procédé comporte une troisième étape intermédiaire 325 se déroulant après la huitième étape 320. Au cours de cette troisième étape intermédiaire 325, on calcule la masse maximale autorisée au décollage de l'aéronef 10 en fonction de la vitesse calculée TAS_{perfo} du vent local, par exemple à partir d'abaques fournis par le constructeur de l'aéronef 10.

Enfin, au cours de la neuvième étape 330, on affiche sur le moyen de visualisation 25 la vitesse calculée TAS_{perfo} du vent local et éventuellement la masse maximale autorisée au décollage de l'aéronef 10. D'autres informations susceptibles d'être intéressantes pour le pilote peuvent également être affichées, telles que la vitesse mesurée moyenne et la direction moyenne du vent local ainsi que la vitesse moyenne et la direction moyenne du vent local observé et leurs variations éventuelles.

Ces deux modes de réalisation du procédé de détermination de la vitesse longitudinale du vent à prendre en compte pour déterminer la masse maximale autorisée au décollage d'un aéronef 10 permettent ainsi de consolider les mesures du vent local d'un anémomètre embarqué précis et intègre avec des observations et des prévisions météorologiques afin, si les conditions météorologiques sont stables et favorables, d'optimiser les capacités au décollage de l'aéronef.

En outre, lorsque la première valeur de cap est différente du cap instantané de l'aéronef 10 en attente de décollage et définit une valeur de cap de décollage, il est intéressant de calculer la valeur de la masse maximum autorisée au décollage de l'aéronef 10 avec la vitesse du vent subi par l'aéronef selon cette valeur de cap de décollage. Le procédé selon l'invention doit alors être appliqué en utilisant comme première valeur de cap la valeur de cap de décollage correspondant au cap que va rapidement suivre l'aéronef 10 lors de son décollage. Cette valeur de cap de décollage doit être définie manuellement par le pilote.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de détermination de la vitesse du vent à prendre en compte pour déterminer la masse maximale autorisée au décollage d'un aéronef (10), ledit aéronef (10) étant en attente d'un décollage et comportant :
- au moins un moyen de mesures anémométriques (21),
- au moins un moyen de réception (22,23) d'informations d'observation et de prévision météorologique,
- au moins un moyen de consolidation (30), et
- au moins un moyen de visualisation (25),
au cours duquel,
- on détermine une première valeur de cap dans un repère terrestre (Xₜ,Yₜ,Zₜ),
- on mesure au moins une seconde valeur courante TASᵢₙₛₜ de la vitesse du vent local selon une direction prédéfinie, ladite direction prédéfinie étant une direction correspondant à ladite première valeur de cap,
- on reçoit des premières informations d'observation météorologique et des secondes informations de prévision météorologique de la zone où se situe ledit aéronef (10) ou bien d'une zone proche,
- on calcule une vitesse mesurée TASₘₑₛ dudit vent local selon ladite direction prédéfinie à partir de ladite / desdites seconde(s) valeur(s) courante(s) TASᵢₙₛₜ de ladite vitesse dudit vent local,
- on calcule une vitesse observée TAS_{obs} dudit vent local selon ladite direction prédéfinie à partir desdites premières informations d'observation météorologique et de ladite première valeur de cap,
- on compare ladite vitesse mesurée TASₘₑₛ et ladite vitesse observée TAS_{obs} dudit vent local,
- on détermine une vitesse calculée TAS_{perfo} dudit vent local à prendre en compte pour déterminer la masse maximale autorisée au décollage dudit aéronef (10) selon ladite direction prédéfinie selon ladite comparaison de ladite vitesse mesurée TASₘₑₛ et de ladite vitesse observée TAS_{obs}, et
- on affiche sur un moyen de visualisation (25) ladite vitesse calculée TAS_{perfo} dudit vent local.

2. Procédé selon la revendication 1,
**caractérisé en ce que** ladite vitesse mesurée TASₘₑₛ dudit vent local est égale à ladite seconde valeur courante TASᵢₙₛₜ.

3. Procédé selon la revendication 1,
**caractérisé en ce que**, au moins deux secondes valeurs courantes TASᵢₙₛₜ ayant été mesurées pendant une durée prédéterminée, on calcule une vitesse mesurée moyenne TAS_{moy} dudit vent local selon ladite direction prédéfinie à partir desdites secondes valeurs courantes TASᵢₙₛₜ mesurées pendant ladite durée prédéterminée, ladite vitesse mesurée moyenne TAS_{moy} étant égale à la moyenne desdites secondes valeurs courantes TASᵢₙₛₜ, ladite vitesse mesurée TASₘₑₛ dudit vent local étant égale à ladite vitesse mesurée moyenne TAS_{moy}.

4. Procédé selon l'une quelconque des revendications 1 à 3, **caractérisé en ce que** ladite première valeur de cap est déterminée par un pilote dudit aéronef (10), le cap instantané dudit aéronef (10) étant également déterminé lorsque ladite première valeur de cap est différente dudit cap instantané dudit aéronef (10) afin de calculer un gisement de ladite direction prédéfinie par rapport à une direction longitudinale d'extension dudit aéronef (10) s'étendant entre l'avant et l'arrière dudit aéronef (10).

5. Procédé selon l'une quelconque des revendications 1 à 3, **caractérisé en ce que**, ledit aéronef (10) comportant au moins un moyen de détermination du cap (13) dudit aéronef (10), ladite première valeur de cap est égale au cap instantané dudit aéronef (10) déterminé par ledit/lesdits moyen(s) de détermination du cap (13) dudit aéronef (10), ladite direction prédéfinie étant alors une direction longitudinale d'extension dudit aéronef (10) s'étendant entre l'avant et l'arrière dudit aéronef (10).

6. Procédé selon l'une quelconque des revendications 1 à 5, **caractérisé en ce que** l'on décode lesdites premières informations d'observation météorologique et on extrait desdites premières informations une vitesse observée moyenne dudit vent local et une direction observée dudit vent local ainsi qu'un premier critère d'instabilité dudit vent local, puis on calcule ladite vitesse observée TAS_{obs} dudit vent local selon ladite direction prédéfinie à partir de ladite vitesse observée moyenne, de ladite direction observée moyenne dudit vent local et de ladite première valeur de cap.

7. Procédé selon la revendication 6,
**caractérisé en ce que** l'on décode lesdites secondes informations de prévision météorologique et on extrait desdites secondes informations un second critère d'instabilité dudit vent local.

8. Procédé selon la revendication 7,
**caractérisé en ce que**, ladite vitesse mesurée TASₘₑₛ et ladite vitesse observée TAS_{obs} étant positives, une vitesse dudit vent local selon ladite direction prédéfinie étant considérée positive lorsque ledit vent local constitue au moins partiellement un vent de face par rapport audit aéronef (10),
- si ledit premier critère d'instabilité et/ou ledit second critère d'instabilité dudit vent local signale(nt) une instabilité dudit vent local, ladite vitesse calculée TAS_{perfo} dudit vent local est égale à ladite vitesse observée divisée par deux TAS_{obs}/2,
- si ladite vitesse mesurée TASₘₑₛ est supérieure ou égale à ladite vitesse observée TAS_{obs} et si ledit premier critère d'instabilité et ledit second critère d'instabilité dudit vent local ne signalent aucune instabilité dudit vent local, ladite vitesse calculée TAS_{perfo} est égale à ladite vitesse observée TAS_{obs},
- si ladite vitesse mesurée TASₘₑₛ est strictement comprise entre ladite vitesse observée TAS_{obs} et ladite vitesse observée divisée par deux TAS_{obs}/2 et si ledit premier critère d'instabilité et ledit second critère d'instabilité dudit vent local ne signalent aucune instabilité dudit vent local, ladite vitesse calculée TAS_{perfo} est égale à ladite vitesse mesurée TASₘₑₛ,
- si ladite vitesse mesurée TASₘₑₛ est inférieure ou égale à ladite vitesse observée divisée par deux TAS_{obs}/2 et si ledit premier critère d'instabilité et ledit second critère d'instabilité dudit vent local ne signalent aucune instabilité dudit vent local, ladite vitesse calculée TAS_{perfo} est égale à ladite vitesse observée divisée par deux TAS_{obs}/2,
- si aucune vitesse mesurée TASₘₑₛ n'est fournie et si ledit premier critère d'instabilité et ledit second critère d'instabilité dudit vent local ne signalent aucune instabilité dudit vent local, ladite vitesse calculée TAS_{perfo} est égale à ladite vitesse observée divisée par deux TAS_{obs}/2, et
- si aucune vitesse observée TAS_{obs} n'est disponible et si ledit premier critère d'instabilité et ledit second critère d'instabilité dudit vent local ne signalent aucune instabilité dudit vent local, ladite vitesse calculée TAS_{perfo} est égale à ladite vitesse mesurée TASₘₑₛ divisée par deux.

9. Procédé selon l'une quelconque des revendications 1 à 7
**caractérisé en ce que**, ladite vitesse mesurée TASₘₑₛ et/ou ladite vitesse observée TAS_{obs} étant négatives, une vitesse dudit vent local selon ladite direction prédéfinie étant considérée négative lorsque ledit vent local constitue au moins partiellement un vent arrière par rapport audit aéronef (10), ladite vitesse calculée TAS_{perfo} est égale à la valeur minimale parmi ladite vitesse mesurée TASₘₑₛ et ladite vitesse observée TAS_{obs}.

10. Procédé selon l'une quelconque des revendications 1 à 9,
**caractérisé en ce que**, ledit aéronef (10) comportant au moins un moyen de localisation (14), on utilise des informations de localisation et de datation fournies par ledit moyen de localisation (14) pour déterminer les premières et secondes informations à utiliser.

11. Procédé selon l'une quelconque des revendications 1 à 9,
**caractérisé en ce qu'**un pilote dudit aéronef (10) fournit des informations de localisation dudit aéronef (10) et de datation pour déterminer les premières et secondes informations à utiliser.

12. Procédé selon l'une quelconque des revendications 1 à 11,
**caractérisé en ce que** lesdites premières et secondes informations sont issues de rapports contenant des données numériques correspondant à la position dudit aéronef (10) et à la date courante.

13. Procédé selon l'une quelconque des revendications 1 à 12,
**caractérisé en ce que** lesdites premières informations sont issues d'un rapport METAR et lesdites secondes informations sont issues d'un rapport TAF.

14. Procédé selon l'une quelconque des revendications 1 à 13,
**caractérisé en ce que**, ledit aéronef (10) étant un aéronef à voilure tournante comportant au moins un rotor principal (11) et éventuellement un rotor arrière (12), chaque seconde valeur courante TASᵢₙₛₜ est corrigée afin de prendre en compte les perturbations induites par ledit rotor principal (11) et/ou par le dit rotor arrière (12) sur chaque seconde valeur courante TASᵢₙₛₜ.

15. Procédé selon l'une quelconque des revendications 1 à 14,
**caractérisé en ce que** chaque seconde valeur courante TASᵢₙₛₜ est mesurée dans l'environnement immédiat dudit aéronef (10).

16. Procédé selon l'une quelconque des revendications 1 à 15,
**caractérisé en ce que** l'on corrige chaque seconde valeur courante TASᵢₙₛₜ avec une précision prédéterminée.

17. Procédé selon la revendication 16,
**caractérisé en ce que** ladite précision prédéterminée est égale à 2 noeuds (2kt).

18. Procédé selon l'une quelconque des revendications 3 à 17,
**caractérisé en ce que** ladite durée prédéterminée est égale à 2 minutes (2mn).

19. Procédé selon l'une quelconque des revendications 1 à 18,
**caractérisé en ce que**, ledit aéronef comportant plusieurs moyens de mesures anémométriques (21), on consolide chaque seconde valeur courante TASᵢₙₛₜ par redondance, surveillance ou bien par tests de cohérence.

20. Procédé selon l'une quelconque des revendications 1 à 19,
**caractérisé en ce que** chaque seconde valeur courante TASᵢₙₛₜ a une probabilité d'erreurs non signalées prédéfinie.

21. Procédé selon l'une quelconque des revendications 1 à 20,
**caractérisé en ce que** l'on calcule la masse maximale autorisée au décollage dudit aéronef (10) en fonction de ladite vitesse calculée TAS_{perfo} dudit vent local et on l'affiche sur ledit moyen de visualisation (25).

22. Dispositif de détermination (1) de la vitesse du vent à prendre en compte pour déterminer la masse maximale autorisée au décollage d'un aéronef (10) comportant :
- au moins un moyen de mesures anémométriques (21),
- au moins un moyen de réception (22,23) d'informations d'observation et de prévision météorologique,
- au moins un moyen de consolidation (30), comportant au moins un calculateur (31) et au moins un moyen de stockage (32), et
- au moins un moyen de visualisation (25),
**caractérisé en ce que** chaque moyen de mesures anémométriques (21) est adapté pour mesurer au moins une seconde valeur courante TASᵢₙₛₜ de la vitesse du vent local, chaque moyen de réception (22,23) d'informations d'observation et de prévision météorologique permet recevoir des premières informations d'observation météorologique et des secondes informations de prévision météorologique de la zone où se situe ledit aéronef (10) ou bien d'une zone proche, chaque moyen de consolidation (30) est adapté pour calculer une vitesse mesurée TASₘₑₛ dudit vent local à partir de ladite / desdites seconde(s) valeur(s) courante(s) TASᵢₙₛₜ, pour calculer une vitesse observée TAS_{obs} dudit vent local à partir desdites premières informations d'observation météorologique et d'une première valeur de cap, pour comparer ladite vitesse mesurée TASₘₑₛ et ladite vitesse observée TAS_{obs} dudit vent local, et pour déterminer une vitesse calculée TAS_{perfo} dudit vent local à prendre en compte pour déterminer ladite masse maximale autorisée au décollage dudit aéronef (10) selon ladite comparaison de ladite vitesse mesurée TASₘₑₛ et de ladite vitesse observée TAS_{obs}, ledit dispositif mettant en oeuvre le procédé selon l'une quelconque des revendications 1 à 21.

## Patentansprüche

1. Verfahren zur Bestimmung der Windgeschwindigkeit, die zur Bestimmung der maximal zulässigen Masse beim Abheben eines Flugzeugs (10) berücksichtigt werden muss, wobei das Flugzeug (10) abhebebereit ist und aufweist:
- mindestens ein Windmessgerät (21),
- mindestens ein Mittel (22, 23) zum Empfangen von Wetterbeobachtungs- und Vorhersageinformationen,
- mindestens ein Konsolidierungsmittel (30), und
- mindestens ein Anzeigemittel (25),
bei dem
- ein erster Wert des Kurses in einem terrestrischen Koordinatensystem (Xₜ, Yₜ, Zₜ) bestimmt wird,
- mindestens ein zweiter aktueller Wert TASᵢₙₛₜ der lokalen Windgeschwindigkeit in einer vordefinierten Richtung gemessen wird, wobei die vordefinierte Richtung eine Richtung ist, die dem ersten Wert des Kurses entspricht,
- erste Wetterbeobachtungsinformationen und zweite Wettervorhersageinformationen in dem Bereich, in dem sich das Flugzeug (10) befindet, oder in einem nahen Bereich empfangen werden,
- eine gemessene Geschwindigkeit TASₘₑₛ des lokalen Windes in der vordefinierten Richtung ausgehend von dem/den zweiten aktuellen Wert/Werten TASᵢₙₛₜ der Geschwindigkeit des lokalen Windes berechnet wird,
- eine festgestellte Geschwindigkeit TAS_{obs} des lokalen Windes in der vorbestimmten Richtung ausgehend von den ersten Wetter-beobachtungsinformationen und dem ersten Wert des Kurses berechnet wird,
- die gemessene Geschwindigkeit TASₘₑₛ und die festgestellte Geschwindigkeit TAS_{obs} des lokalen Windes verglichen werden,
- eine berechnete Geschwindigkeit TAS_{perfo} des lokalen Windes bestimmt wird, die berücksichtigt werden muss, um die maximal zulässige Masse beim Abheben des Flugzeugs (10) in der vordefinierten Richtung gemäß dem Vergleich der gemessenen Geschwindigkeit TASₘₑₛ und der festgestellten Geschwindigkeit TAS_{obs} zu bestimmen, und
- die berechnete Geschwindigkeit TAS_{perfo} des lokalen Winds auf einem Anzeigemittel (25) angezeigt wird.

2. Verfahren nach Anspruch 1,
**dadurch gekennzeichnet, dass** die gemessene Geschwindigkeit TASₘₑₛ des lokalen Windes gleich dem zweiten aktuellen Wert TASᵢₙₛₜ ist.

3. Verfahren nach Anspruch 1,
**dadurch gekennzeichnet, dass**, wenn mindestens zwei zweite aktuelle Werte TASᵢₙₛₜ während einer vorbestimmten Zeitdauer gemessen wurden, eine mittlere gemessene Geschwindigkeit TAS_{moy} des lokalen Windes in der vordefinierten Richtung ausgehend von den zweiten aktuellen Werten TASᵢₙₛₜ, die während der vorbestimmten Zeitdauer gemessen wurden, berechnet wird, wobei die mittlere gemessene Geschwindigkeit TAS_{moy} gleich dem Mittel der zweiten aktuellen Werte TASᵢₙₛₜ ist, wobei die gemessene Geschwindigkeit TASₘₑₛ des lokalen Windes gleich der mittleren gemessenen Geschwindigkeit TAS_{moy} ist.

4. Verfahren nach einem der Ansprüche 1 bis 3,
**dadurch gekennzeichnet, dass** der erste Wert des Kurses von einem Piloten des Flugzeugs (10) bestimmt wird, der momentane Kurs des Flugzeugs (10) ebenfalls bestimmt wird, wenn der erste Wert des Kurses von dem momentanen Kurs des Flugzeugs (10) verschieden ist, um eine Seitenpeilung der vordefinierten Richtung relativ zu einer Längserstreckungsrichtung des Flugzeugs (10), die sich vom Bug zum Heck des Flugzeugs (10) erstreckt, zu berechnen.

5. Verfahren nach einem der Ansprüche 1 bis 3,
**dadurch gekennzeichnet, dass**, wenn das Flugzeug (10) mindestens ein Mittel zum Bestimmen des Kurses (13) des Flugzeugs (10) aufweist, der erste Wert des Kurses gleich dem momentanen Kurs des Flugzeugs (10) ist, der durch die Mittel zur Bestimmung des Kurses (13) des Flugzeugs (10) bestimmt wird, wobei die vordefinierte Richtung somit eine Längserstreckungsrichtung des Flugzeugs (10) ist, die sich zwischen dem Bug und dem Heck des Flugzeugs (10) erstreckt.

6. Verfahren nach einem der Ansprüche 1 bis 5,
**dadurch gekennzeichnet, dass** die ersten Wetterbeobachtungsinformationen decodiert werden, und aus den ersten Informationen eine festgestellte mittlere Geschwindigkeit des lokalen Windes und eine festgestellte Richtung des lokalen Windes sowie ein erstes Instabilitätskriterium des lokalen Windes gewonnen werden, und dann die festgestellte Geschwindigkeit TAS_{obs} des lokalen Windes in der vordefinierten Richtung ausgehend von der festgestellten mittleren Geschwindigkeit, der festgestellten mittleren Richtung des lokalen Windes und dem ersten Wert des Kurses berechnet wird.

7. Verfahren nach Anspruch 6,
**dadurch gekennzeichnet, dass** die zweiten Wettervorhersageinformationen decodiert werden und aus den zweiten Informationen ein zweites Instabilitätskriterium des lokalen Windes gewonnen wird.

8. Verfahren nach Anspruch 7,
**dadurch gekennzeichnet, dass**, wenn die gemessene Geschwindigkeit TASₘₑₛ und die festgestellte Geschwindigkeit TAS_{obs} positiv sind, eine Geschwindigkeit des lokalen Windes in der vordefinierten Richtung als positiv betrachtet wird, wenn der lokale Wind mindestens teilweise einen Gegenwind gegenüber dem Flugzeug (10) darstellt,
- wenn das erste Instabilitätskriterium und/oder das zweite Instabilitätskriterium des lokalen Windes eine Instabilität des lokalen Winds anzeigt bzw. anzeigen, die berechnete Geschwindigkeit TAS_{perfo} des lokalen Windes gleich der festgestellten Geschwindigkeit geteilt durch zwei TAS_{obs}/2 ist,
- wenn die gemessene Geschwindigkeit TASₘₑₛ größer oder gleich der festgestellten Geschwindigkeit TAS_{obs} ist und wenn das erste Instabilitätskriterium und das zweite Instabilitätskriterium des lokalen Windes keine Instabilität des lokalen Windes anzeigen, die berechnete Geschwindigkeit TAS_{perfo} gleich der festgestellten Geschwindigkeit TAS_{obs} ist,
- wenn die gemessene Geschwindigkeit TASₘₑₛ in jedem Fall zwischen der festgestellten Geschwindigkeit TAS_{obs} und der festgestellten Geschwindigkeit geteilt durch zwei TAS_{obs}/2 liegt und wenn das erste Instabilitätskriterium und das zweite Instabilitätskriterium des lokalen Windes keine Instabilität des lokalen Windes anzeigen, die berechnete Geschwindigkeit TAS_{perfo} gleich der gemessenen Geschwindigkeit TASₘₑₛ ist,
- wenn die gemessene Geschwindigkeit TASₘₑₛ kleiner oder gleich der festgestellten Geschwindigkeit geteilt duch zwei TAS_{obs/2} ist und wenn das erste Instabilitätskriterium und das zweite Instabilitätskriterium des lokalen Windes keine Instabilität des lokalen Windes anzeigen, die berechnete Geschwindigkeit TAS_{perfo} gleich der festgestellten Geschwindigkeit geteilt durch zwei TAS_{obs}/2 ist,
- wenn keine gemessene Geschwindigkeit TASₘₑₛ geliefert wird und wenn das erste Instabilitätskriterium und das zweite Instabilitätskriterium des lokalen Windes keine Instabilität des lokalen Windes anzeigen, die berechnete Geschwindigkeit TAS_{perfo} gleich der festgestellten Geschwindigkeit geteilt durch zwei TAS_{obs}/2 ist, und
- wenn keine festgestellte Geschwindigkeit TAS_{obs} verfügbar ist und wenn das erste Instabilitätskriterium und das zweite Instabilitätskriterium des lokalen Windes keine Instabilität des lokalen Windes anzeigen, die berechnete Geschwindigkeit TAS_{perfo} gleich der gemessenen Geschwindigkeit TASₘₑₛ geteilt durch zwei ist.

9. Verfahren nach einem der Ansprüche 1 bis 7,
**dadurch gekennzeichnet, dass**, wenn die gemessene Geschwindigkeit TASₘₑₛ und/oder die festgestellte Geschwindigkeit TAS_{obs} negativ ist bzw. sind, eine Geschwindigkeit des lokalen Windes in der vordefinierten Richtung als negativ betrachtet wird, wenn der lokale Wind mindestens teilweise einen Rückenwind bezüglich des Flugzeugs (10) darstellt, wobei die berechnete Geschwindigkeit TAS_{perfo} gleich einem minimalen Wert unter der gemessenen Geschwindigkeit TASₘₑₛ und der festgestellten Geschwindigkeit TAS_{obs} ist.

10. Verfahren nach einem der Ansprüche 1 bis 9,
**dadurch gekennzeichnet, dass**, wenn das Flugzeug (10) mindestens ein Positionsbestimmungsmittel (14) aufweist, Positionsbestimmungsinformationen und Datierungen, die von dem Positionsbestimmungsmittel (14) geliefert werden, verwendet werden, um die ersten und die zweiten zu verwendenden Informationen zu bestimmen.

11. Verfahren nach einem der Ansprüche 1 bis 9,
**dadurch gekennzeichnet, dass** ein Pilot des Flugzeugs (10) Positionsbestimmungsinformationen des Flugzeugs (10) und eine Datierung liefert, um die ersten und zweiten zu verwendenden Informationen zu bestimmen.

12. Verfahren nach einem der Ansprüche 1 bis 11,
**dadurch gekennzeichnet, dass** die ersten und zweiten Informationen aus Meldungen stammen, die numerische Daten enthalten, die der Position des Flugzeugs (10) und dem aktuellen Datum entsprechen.

13. Verfahren nach einem der Ansprüche 1 bis 12,
**dadurch gekennzeichnet, dass** die ersten Informationen aus einem METAR(Meteorological Airport Report)-Bericht stammen und die zweiten Informationen aus einem TAF(Terminal Airport Forecast)-Bericht stammen.

14. Verfahren nach einem der Ansprüche 1 bis 13,
**dadurch gekennzeichnet, dass** das Flugzeug (10) ein Drehflügelflugzeug mit mindestens einem Hauptrotor (11) und gegebenenfalls einem Heckrotor (12) ist, wobei jeder der zweiten aktuellen Werte TASᵢₙₛₜ korrigiert wird, um Störungen zu berücksichtigen, die durch den Hauptrotor (11) und/oder den Heckrotor (12) auf jeden der zweiten aktuellen Werte TASᵢₙₛₜ bewirkt werden.

15. Verfahren nach einem der Ansprüche 1 bis 14,
**dadurch gekennzeichnet, dass** jeder der zweiten aktuellen Werte TASᵢₙₛₜ in der unmittelbaren Umgebung des Flugzeugs (10) gemessen wird.

16. Verfahren nach einem der Ansprüche 1 bis 15,
**dadurch gekennzeichnet, dass** jeder der zweiten aktuellen Werte TASᵢₙₛₜ mit einer vorbestimmten Genauigkeit korrigiert wird.

17. Verfahren nach Anspruch 16,
**dadurch gekennzeichnet, dass** die vorbestimmte Genauigkeit gleich 2 Knoten (2 kt) ist.

18. Verfahren nach einem der Ansprüche 3 bis 17,
**dadurch gekennzeichnet, dass** die vorbestimmte Zeitdauer gleich 2 Minuten (2 min) ist.

19. Verfahren nach einem der Ansprüche 1 bis 18,
**dadurch gekennzeichnet, dass**, wenn das Flugzeug mehrere Windmessgeräte (21) aufweist, jeder der zweiten aktuellen Werte TASᵢₙₛₜ konsolidiert wird durch Redundanz, Überwachung oder durch Kohärenztests.

20. Verfahren nach einem der Ansprüche 1 bis 19,
**dadurch gekennzeichnet, dass** jeder der zweiten aktuellen Werte TASᵢₙₛₜ eine vordefinierte Wahrscheinlichkeit nicht angezeigter Fehler aufweist.

21. Verfahren nach einem der Ansprüche 1 bis 20,
**dadurch gekennzeichnet, dass** die beim Abheben des Flugzeugs (10) maximal zulässige Masse berechnet wird in Abhängigkeit von der berechneten Geschwindigkeit TAS_{perfo} des lokalen Windes, und diese auf dem Anzeigemittel (25) angezeigt wird.

22. Vorrichtung (1) zur Bestimmung der Windgeschwindigkeit, die für die Bestimmung der maximal zulässigen Masse beim Abheben eines Flugzeugs (10) zu berücksichtigen ist, mit:
- mindestens einem Windmessgerät (21),
- mindestens einem Mittel (22, 23) zum Empfangen von Wetterbeobachtungs- und Wettervorhersageinformationen,
- mindestens einem Konsolidierungsmittel (30), welches mindestens einen Rechner (31) und mindestens einen Speicher (32) aufweist, und
- mindestens einem Anzeigemittel (25),
**dadurch gekennzeichnet, dass** jedes Windmessgerät (21) ausgebildet ist, um mindestens einen zweiten aktuellen Wert TASᵢₙₛₜ der Geschwindigkeit des lokalen Windes zu messen, wobei es jedes Mittel (22, 23) zum Empfangen von Wetterbeobachtungsinformationen und Wettervorhersageinformationen ermöglicht, erste Wetterbeobachtungsinformationen und zweite Wettervorhersageinformationen des Bereichs, in dem sich das Flugzeug (10) befindet, oder eines nahen Bereichs zu empfangen, wobei das Konsolidierungsmittel (30) ausgebildet ist, um eine gemessene Geschwindigkeit TASₘₑₛ des lokalen Windes zu berechnen ausgehend von dem/den zweiten aktuellen Wert/Werten TASᵢₙₛₜ, um eine festgestellte Geschwindigkeit TAS_{obs} des lokalen Windes ausgehend von den ersten Wetterbeobachtungsinformationen und einem ersten Wert des Kurses zu berechnen, um die gemessene Geschwindigkeit TASₘₑₛ und die festgestellte Geschwindigkeit TAS_{obs} des lokalen Windes zu vergleichen, und um eine berechnete Geschwindigkeit TAS_{perfo} des lokalen Windes, die zur Bestimmung der maximal zulässigen Masse beim Abheben des Flugzeugs (10) zu berücksichtigen ist, gemäß dem Vergleich der gemessenen Geschwindigkeit TASₘₑₛ und der festgestellten Geschwindigkeit TAS_{obs} zu bestimmen, wobei die Vorrichtung das Verfahren nach einem der Ansprüche 1 bis 21 ausführt.

## Claims

1. Method for determination of the speed of the wind to be taken into account to determine the maximum authorised take-off mass of an aircraft (10), said aircraft (10) waiting to take off and comprising:
- at least one anemometric measurement means (21),
- at least one receiving means (22,23) for receiving observation information and weather forecast information,
- at least one consolidation means (30), and
- at least one display means (25),
during which,
- a first heading value in a terrestrial reference frame (Xₜ, Yₜ, Zₜ) is determined,
- at least one second current value TASᵢₙₛₜ of the speed of the local wind in a predefined direction is measured, said predefined direction being a direction corresponding to said first heading value,
- first weather observation information and second weather forecast information for the area in which said aircraft (10) is situated or for a nearby area is received,
- a measured speed TASₘₑₛ of said local wind in said predefined direction is calculated from said second current value(s) TASᵢₙₛₜ of said speed of said local wind,
- an observed speed TAS_{obs} of said local wind in said predefined direction is calculated from said first weather observation information and said first heading value,
- said measured speed TASₘₑₛ and said observed speed TAS_{obs} of said local wind are compared,
- a calculated speed TAS_{perfo} of said local wind to be taken into account to determine the maximum authorised take-off mass of said aircraft (10) in said predefined direction is determined according to said comparison of said measured speed TASₘₑₛ and said observed speed TAS_{obs}, and
- said calculated speed TAS_{perfo} of said local wind is displayed on a display means (25).

2. Method according to claim 1,
**characterised in that** said measured speed TASₘₑₛ of said local wind is equal to said second current value TASᵢₙₛₜ.

3. Method according to claim 1,
**characterised in that**, at least two second current values TASᵢₙₛₜ having been measured over a predetermined duration, a mean measured speed TAS_{moy} of said local wind in said predefined direction is calculated from said second current values TASᵢₙₛₜ measured over said predetermined duration, said mean measured speed TAS_{moy} being equal to the mean of said second current values TASᵢₙₛₜ, said measured speed TASₘₑₛ of said local wind being equal to said mean measured speed TAS_{moy}.

4. Method according to any one of claims 1 to 3,
**characterised in that** said first heading value is determined by a pilot of said aircraft (10), the instantaneous heading of said aircraft (10) also being determined when said first heading value is different from said instantaneous heading of said aircraft (10) in order to calculate a bearing of said predefined direction relative to a longitudinal direction of extension of said aircraft (10) extending between the front and the rear of said aircraft (10).

5. Method according to any one of claims 1 to 3,
**characterised in that**, said aircraft (10) comprising at least one means for determination of the heading (13) of said aircraft (10), said first heading value is equal to the instantaneous heading of said aircraft (10) determined by said means for determination of the heading (13) of said aircraft (10), said predefined direction then being a longitudinal direction of extension of said aircraft (10) extending between the front and the rear of said aircraft (10).

6. Method according to any one of claims 1 to 5,
**characterised in that** said first weather observation information is decoded and a mean observed speed of said local wind and an observed direction of said local wind and also a first instability criterion of said local wind are extracted from said first information, and then said observed speed TAS_{obs} of said local wind in said predefined direction is calculated from said mean observed speed, from said mean observed direction of said local wind and from said first heading value.

7. Method according to claim 6,
**characterised in that** said second weather forecast information is decoded and a second instability criterion of said local wind is extracted from said second information.

8. Method according to claim 7,
**characterised in that**, said measured speed TASₘₑₛ and said observed speed TAS_{obs} being positive, a speed of said local wind in said predefined direction being considered to be positive when said local wind constitutes at least in part a head wind relative to said aircraft (10),
- if said first instability criterion and/or said second instability criterion of said local wind indicate(s) instability of said local wind, said calculated speed TAS_{perfo} of said local wind is equal to said observed speed divided by two TAS_{obs}/2,
- if said measured speed TASₘₑₛ is greater than or equal to said observed speed TAS_{obs} and if said first instability criterion and said second instability criterion of said local wind do not indicate any instability of said local wind, said calculated speed TAS_{perfo} is equal to said observed speed TAS_{obs},
- if said measured speed TASₘₑₛ is strictly comprised between said observed speed TAS_{obs} and said observed speed divided by two TAS_{obs}/2 and if said first instability criterion and said second instability criterion of said local wind do not indicate any instability of said local wind, said calculated speed TAS_{perfo} is equal to said measured speed TASₘₑₛ,
- if said measured speed TASₘₑₛ is less than or equal to said observed speed divided by two TAS_{obs}/2 and if said first instability criterion and said second instability criterion of said local wind do not indicate any instability of said local wind, said calculated speed TAS_{perfo} is equal to said observed speed divided by two TAS_{obs}/2,
- if no measured speed TASₘₑₛ is provided and if said first instability criterion and said second instability criterion of said local wind do not indicate any instability of said local wind, said calculated speed TASp_{erfo} is equal to said observed speed divided by two TAS_{obs}/2, and
- if no observed speed TAS_{obs} is available and if said first instability criterion and said second instability criterion of said local wind do not indicate any instability of said local wind, said calculated speed TAS_{perfo} is equal to said measured speed TASₘₑₛ divided by two.

9. Method according to any one of claims 1 to 7,
**characterised in that**, said measured speed TASₘₑₛ and/or said observed speed TAS_{obs} being negative, a speed of said local wind in said predefined direction being considered as being negative when said local wind constitutes at least in part a tail wind relative to said aircraft (10), said calculated speed TAS_{perfo} is equal to the minimum value from among said measured speed TASₘₑₛ and said observed speed TAS_{obs}.

10. Method according to any one of claims 1 to 9,
**characterised in that**, said aircraft (10) comprising at least one locating means (14), location information and date information supplied by said locating means (14) are used to determine the first and second information to be used.

11. Method according to any one of claims 1 to 9,
**characterised in that** a pilot of said aircraft (10) supplies location information of said aircraft (10) and date information in order to determine the first and second information to be used.

12. Method according to any one of claims 1 to 11,
**characterised in that** said first and second information come from reports containing digital data corresponding to the position of said aircraft (10) and to the current date.

13. Method according to any one of claims 1 to 12,
**characterised in that** said first information comes from a METAR report and said second information comes from a TAF report.

14. Method according to any one of claims 1 to 13,
**characterised in that**, said aircraft (10) being a rotary wing aircraft comprising at least one main rotor (11) and possibly a rear rotor (12), each second current value TASᵢₙₛₜ is corrected in order to take into account the disturbances induced by said main rotor (11) and/or by said rear rotor (12) on each second current value TASᵢₙₛₜ.

15. Method according to any one of claims 1 to 14,
**characterised in that** each second current value TASᵢₙₛₜ is measured in the immediate surroundings of said aircraft (10).

16. Method according to any one of claims 1 to 15,
**characterised in that** each second current value TASᵢₙₛₜ is corrected with a predetermined accuracy.

17. Method according to claim 16,
**characterised in that** said predetermined accuracy is equal to knots (2 kt).

18. Method according to any one of claims 3 to 17,
**characterised in that** said predetermined duration is equal to 2 minutes (2 min).

19. Method according to any one of claims 1 to 18,
**characterised in that**, said aircraft comprising a plurality of anemometric measurement means (21), each second current value TASᵢₙₛₜ is consolidated by redundancy, monitoring or by testing for consistency.

20. Method according to any one of claims 1 to 19,
**characterised in that** each second current value TASᵢₙₛₜ has a non-indicated predefined error probability.

21. Method according to any one of claims 1 to 20, **characterised in that** the maximum authorised take-off mass of said aircraft (10) is calculated as a function of said calculated speed TAS_{perfo} of said local wind and is displayed on said display means (25).

22. Device for determination (1) of the speed of the wind to be taken into account to determine the maximum authorised take-off mass of an aircraft (10) comprising:
- at least one anemometric measurement means (21),
- at least one receiving means (22,23) for receiving observation information and weather forecast information,
- at least one consolidation means (30), comprising at least one computer (31) and at least one storage means (32), and
- at least one display means (25),
**characterised in that** each anemometric measurement means (21) is adapted to measure at least one second current value TASᵢₙₛₜ of the speed of the local wind, each receiving means (22,23) for receiving observation information and weather forecast information makes it possible to receive first weather observation information and second weather forecast information for the area in which said aircraft (10) is situated or for a nearby area, each consolidation means (30) is adapted to calculate a measured speed TASₘₑₛ of said local wind from said second current value(s) TASᵢₙₛₜ, to calculate an observed speed TAS_{obs} of said local wind from said first weather observation information and a first heading value, to compare said measured speed TASₘₑₛ and said observed speed TAS_{obs} of said local wind, and to determine a calculated speed TAS_{perfo} of said local wind to be taken into account to determine said maximum authorised take-off mass of said aircraft (10) according to said comparison of said measured speed TASₘₑₛ and said observed speed TAS_{obs}, said device performing the method according to any one of claims 1 to 21.
